(19) Europäisches Patentamt
European Patent Office
Office européen des brevets

(11) EP 3 413 535 B1

(12) **EUROPEAN PATENT SPECIFICATION**

(45) Date of publication and mention of the grant of the patent:
**16.12.2020 Bulletin 2020/51**

(51) Int Cl.:
***H04L 29/06*** *(2006.01)* ***H04L 9/32*** *(2006.01)*
***G06F 3/12*** *(2006.01)*

(21) Application number: **18175474.8**

(22) Date of filing: **01.06.2018**

(54) **INFORMATION PROCESSING APPARATUS, SETTING APPARATUS, CONTROL METHOD FOR INFORMATION PROCESSING APPARATUS, CONTROL METHOD FOR SETTING APPARATUS, AND PROGRAM**

INFORMATIONSVERARBEITUNGSVORRICHTUNG, EINSTELLUNGSVORRICHTUNG, STEUERUNGSVERFAHREN FÜR INFORMATIONSVERARBEITUNGSVORRICHTUNG, STEUERUNGSVERFAHREN FÜR EINSTELLUNGSVORRICHTUNG UND PROGRAMM

APPAREIL DE TRAITEMENT D'INFORMATIONS, DISPOSITIF DE RÉGLAGE, PROCÉDÉ DE COMMANDE POUR APPAREIL DE TRAITEMENT D'INFORMATIONS, PROCÉDÉ DE COMMANDE POUR APPAREIL DE RÉGLAGE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2017 JP 2017113632**

(43) Date of publication of application:
**12.12.2018 Bulletin 2018/50**

(73) Proprietor: **CANON KABUSHIKI KAISHA**
**Ohta-ku**
**Tokyo 146-8501 (JP)**

(72) Inventor: **YAMAUCHI, Hisayuki**
**Tokyo, 146-8501 (JP)**

(74) Representative: **TBK**
**Bavariaring 4-6**
**80336 München (DE)**

(56) References cited:
**US-A1- 2008 178 003** **US-A1- 2013 061 299**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 413 535 B1

## Description

BACKGROUND OF THE INVENTION

Field of the Invention

The present invention relates to a technique for setting a timing for updating an electronic certificate.

Description of the Related Art

Heretofore, the identification and authentication of a safe network have been realized (RFC3647: Internet X.509 Public Key Infrastructure Certificate Policy and Certification Practices Framework (https://www.ipa.go.jp /security/rfc/RFC3647JA.html)) by public key infrastructure (PKI) technology using an electronic certificate.

For example, an information processing apparatus as a client can verify the validity of a server by acquiring a server's public-key certificate acquired from the server and a certificate authority certificate acquired from a certificate authority that has issued the server's public-key certificate. In addition, the server can verity the validity of the client by providing the server with a client's public-key certificate for the information processing apparatus.

A validity period is set to an electronic certificate. If the validity period has expired, communication using the electronic certificate is disabled. Accordingly, it is necessary to update the electronic certificate when the validity period has expired, or immediately before the expiration of the validity period.

Japanese Patent Application Laid-Open No. 2016-178458 discusses a technique for automatically updating an electronic certificate at a predetermined timing before the expiration of a validity period. When the predetermined timing, which is set in advance, is reached, the information processing apparatus transmits an update request to a certificate management server via a network and receives an electronic certificate from the certificate management server.

In a case where a plurality of information processing apparatuses configured to automatically acquire an electronic certificate on the same date and time is present in the same network environment, electronic certificate issuance requests are transmitted from the large number of information processing apparatuses to a certificate authority server at the same time. Accordingly, data on a large number of electronic certificate issuance requests is transmitted on the network, which may cause congestion on the network, may take time for performing electronic certificate automatic acquisition processing, and may affect other functions using the network.

Further, the transmission of a large number of electronic certificate issuance requests at the same time may cause problems such as a delay in response from the server and interruption of certificate authority services.

Also when an electronic certificate acquisition timing is set to a plurality of information processing apparatuses at once, it is necessary to stably add or update an electronic certificate while preventing the occurrence of congestion on the network and the occurrence of a failure on the server.

Further prior art is disclosed in document US 2013/061299 A1, describing a distributed computer systems with time-dependent credentials, as well as in document US 2008/178003 A1, describing systems and methods for determining a time delay for sending a key update request.

SUMMARY OF THE INVENTION

According to a first aspect of the present invention, there is provided an information processing apparatus as specified in claims 1 to 8. According to a second aspect of the present invention, there is provided a setting apparatus as specified in claims 9 to 11. According to a third aspect of the present invention, there is provided a control method for an information processing apparatus as specified in claim 12. According to a fourth aspect of the present invention, there is provided a control method for a setting apparatus as specified in claim 13. According to a fifth aspect of the present invention, there is provided a program as specified in claim 14. According to a sixth aspect of the present invention, there is provided a program as specified in claim 15.

Further features of the present invention will become apparent from the following description of exemplary embodiments with reference to the attached drawings.

BRIEF DESCRIPTION OF THE DRAWINGS

Fig. 1 is a block diagram illustrating a network configuration according to a first exemplary embodiment of the present invention.

Fig. 2 is a block diagram illustrating a hardware configuration of a multifunction peripheral according to the first exemplary embodiment.

Fig. 3 is a block diagram illustrating software modules included in the multifunction peripheral according to the first exemplary embodiment.

Fig. 4 is a block diagram illustrating a hardware configuration of a personal computer (PC) according to the first exemplary embodiment.

Fig. 5 is a block diagram illustrating software modules included in the PC according to the first exemplary embodiment.

Fig. 6 is a sequence diagram illustrating the entire processing procedure including a setting about automatic acquisition/update of an electronic certificate, delivery of the setting to other devices, and execution of an issuance request for a certificate based on the distributed setting and reception of the certificate in a system according to the first exemplary embodiment.

Figs. 7A, 7B, 7C, and 7D each illustrate a setting screen of a remote user interface (RUI) of the multifunction peripheral according to the first exemplary embodiment.

Fig. 8A illustrates a certificate automatic acquisition/update setting value acquisition screen of the PC according to the first exemplary embodiment, and Fig. 8B illustrates the acquisition screen of the PC according to the first exemplary embodiment after the acquisition of the certificate automatic acquisition/update setting value is completed.

Fig. 9 illustrates transmission data on a certificate automatic acquisition/update setting generated by the multifunction peripheral according to the first exemplary embodiment.

Fig. 10A illustrates a certificate automatic acquisition/update setting value distribution/setting screen of the PC according to the first exemplary embodiment, and Fig. 10B illustrates the distribution/setting screen of the PC according to the first exemplary embodiment after the distribution of a certificate automatic acquisition/update setting value.

Fig. 11 is a flowchart illustrating certificate automatic setting/update setting value acquisition request processing of the PC according to the first exemplary embodiment.

Fig. 12 is a flowchart illustrating certificate automatic setting/update setting value transmission processing of the multifunction peripheral according to the first exemplary embodiment.

Fig. 13 is a flowchart illustrating certificate automatic setting/update setting value distribution/setting request processing of the PC according to the first exemplary embodiment.

Fig. 14 is a flowchart illustrating certificate automatic setting/update distribution/setting processing to be executed by the multifunction peripheral according to the first exemplary embodiment.

Fig. 15 is a diagram including the flowcharts of Fig. 15A and Fig. 15B illustrating certificate issuance request/acquisition processing of the multifunction peripheral according to the first exemplary embodiment.

Fig. 16 is a flowchart illustrating next update date/time determination processing of the multifunction peripheral according to the first exemplary embodiment.

Fig. 17 illustrates an RUI setting screen of a multifunction peripheral according to a second exemplary embodiment.

Fig. 18 illustrates an RUI setting screen of a multifunction peripheral according to a third exemplary embodiment.

Fig. 19 is a flowchart illustrating certificate automatic setting/update setting value distribution/setting request processing of a PC according to the third exemplary embodiment.

Fig. 20 illustrates a certificate automatic acquisition/update setting value distribution/setting screen of the PC according to the third exemplary embodiment.

Fig. 21 illustrates transmission data on a certificate automatic acquisition/update setting generated by the multifunction peripheral according to the third exemplary embodiment.

Fig. 22 is a flowchart illustrating certificate automatic setting/update distribution/setting processing to be executed by the multifunction peripheral according to the third exemplary embodiment.

Fig. 23 is a flowchart illustrating next update date/time determination processing of the multifunction peripheral according to the third exemplary embodiment.

## DESCRIPTION OF THE EMBODIMENTS

Exemplary embodiments of the present invention will be described in detail below with reference to the accompanying drawings. The present invention set forth in the claims is not limited by the following exemplary embodiments, and all combinations of features described in the exemplary embodiments are not always indispensable to solving means of the present invention. A multifunction peripheral (digital multifunction peripheral (MFP)) is illustrated as an information processing apparatus that uses and manages an electronic certificate according to an exemplary embodiment of the present invention. However, the application of the present invention is not limited to a multifunction peripheral. Any information processing apparatus capable of using an electronic certificate is applicable.

Fig. 1 is a block diagram illustrating a network configuration according to a first exemplary embodiment of the present invention.

A multifunction peripheral 100 (image forming apparatus) having a print function is able to transmit and receive print data, scanned image data, device management information, and the like to and from other information processing apparatuses via a network 110. The multifunction peripheral 100 also has a function for performing encryption communication by TLS, IPSEC, IEEE802.1X, or the like, and holds a public key pair and an electronic certificate (hereinafter also referred to simply as a "certificate") which are used for the encryption processing. The term "public key pair" refers to a key pair of a public key and a secret key used for encryption of communication data by public key cryptography.

The multifunction peripheral 100 also has a function for acquiring an electronic certificate via the network and holds setting values necessary for acquiring the certificate. These setting values can be transmitted to information processing apparatuses or other multifunction peripherals on the network. The setting values transmitted from the information processing apparatuses or other multifunction peripherals on the network can be held and set as a setting for the multifunction peripheral 100. The multifunction peripheral 100 is an example of the image forming apparatus, and the image forming apparatus is not limited to this example. A facsimile apparatus, a printer, a copier, or an apparatus having these functions can also be used as the image forming apparatus. The network 110 is also connected to multifunction peripherals 104, 105, and 106. The multifunction peripherals 104, 105, and 106 each have functions similar to those of the multifunction peripheral 100. Although the multifunction peripheral 100 is mainly described below, the exchange of an electronic certificate can also be performed by a plurality of multifunction peripherals.

A certificate authority/registration authority 102 has a function for a certificate authority (CA) to issue an electronic certificate and a function for a registration authority (RA) to accept an electronic certificate issuance request and perform registration processing. Specifically, the certificate authority/registration authority 102 is a server device having a function for distributing a CA certificate via the network 110 and issuing and registering an electronic certificate. Assume in the first exemplary embodiment that a Simple Certificate Enrollment Protocol (SCEP) is used as a protocol for the network 110 in this case. However, the communication protocol is not limited to the SCEP, as long as it is possible to request a certificate authority to issue an electronic certificate and acquire the electronic certificate from the certificate authority. For example, a Certificate Management Protocol (CMP) and an Enrollment over Secure Transport (EST) protocol can also be used.

The information processing apparatuses, such as the multifunction peripheral 100, use the SCEP to perform communication with the certificate authority/registration authority 102 to request the issuance of an electronic certificate and acquire the electronic certificate via the network 110. The multifunction peripheral 100 according to the first exemplary embodiment has a web server function and releases, on the network 110, a remote user interface (RUI) function of a web page type allowing execution of processing for requesting the issuance of an electronic certificate and acquiring the electronic certificate. The term "RUI function" refers to a function for an information terminal, such as a personal computer (PC), to access a web server included in the multifunction peripheral 100 and display, on a display unit of the information terminal, a web page for operating the multifunction peripheral 100.

Upon reception of the electronic certificate issuance request from another information processing apparatus via the network 110, the certificate authority/registration authority 102 performs electronic certificate issuance and registration processing based on the issuance request and transmits the issued electronic certificate as a response to the issuance request. In the first exemplary embodiment, the functions of the certificate authority and the registration authority are implemented by the same server device, but the configuration for implementing the functions of the certificate authority and the registration authority is not particularly limited. The functions of the certificate authority and the registration authority can be implemented by different server devices.

A personal computer (PC) 103 (setting apparatus) is a personal computer. The PC 103 has a web browser function, which allows browsing and using HTML documents and web sites published by the information processing apparatuses connected to the network 110. Further, an application having a function for automatically acquiring an electronic certificate used by the multifunction peripheral 100 is installed in the PC 103. An administrator can use the application to set, from the PC 103, a timing for the multifunction peripheral 100 to automatically acquire an electronic certificate.

Next, an outline of electronic certificate acquisition/update processing according to the first exemplary embodiment will be described.

The administrator of the multifunction peripheral 100 uses a web browser mounted on the PC 103 to connect to a web page for requesting the issuance of an electronic certificate and acquiring the electronic certificate published by the multifunction peripheral 100, and makes a setting and instruction for executing processing for requesting the issuance of an electronic certificate and acquiring the electronic certificate. The multifunction peripheral 100 performs CA certificate acquisition by the SCEP and electronic certificate issuance request (acquisition request) on the certificate authority/registration authority 102 according to the content set and instructed by the administrator. The multifunction peripheral 100 generates keys before execution of the electronic certificate issuance request. Specifically, a key pair used for encryption communication is generated. The multifunction peripheral 100 generates an electronic certificate acquisition request for a generated key pair and transmits the generated electronic certificate acquisition request to the certificate authority/registration authority 102. The multifunction peripheral 100 acquires the electronic certificate that has been issued by the certificate authority/registration authority 102 and is included in a response to the electronic certificate issuance request, and performs setting of the use of the acquired electronic certificate for the multifunction peripheral 100.

Next, the hardware configuration of the multifunction peripheral 100 according to the first exemplary embodiment will be described.

Fig. 2 is a block diagram illustrating the hardware configuration of the multifunction peripheral 100 according to the first exemplary embodiment. A central processing unit (CPU) 201 executes a software program for the multifunction peripheral 100 to control the entire apparatus. A read only memory (ROM) 202 stores a boot program, fixed parameters, and the like for the multifunction peripheral 100. A random access memory (RAM) 203 is used to, for example, store programs and temporarily store data when the CPU 201 controls the multifunction peripheral 100. A hard disk drive (HDD) 204 stores system software, applications, and various data. The CPU 201 executes the boot program stored in the ROM 202, loads programs stored in the HDD 204 into the RAM 203, and executes the loaded programs to control the operation of the multifunction peripheral 100. A network I/F control unit 205 controls transmission and reception of data via the network 110. A scanner interface (I/F) control unit 206 controls reading of a document by a scanner 211. A printer I/F control unit 207 controls print processing and the like to be performed by a printer 210. A panel control unit 208 controls a control panel 212 of a touch panel type to control display of various pieces of information and input of an instruction from a user. A bus 209 connects the CPU 201, the ROM 202, the RAM 203, the HDD 204, the network I/F control unit 205, the scanner I/F control unit 206, the printer I/F control unit 207, and the panel control unit 208 to each other. Control signals from the CPU 201 and data signals to be exchanged between devices are transmitted and received via the bus 209.

Fig. 3 is a block diagram illustrating software modules included in the multifunction peripheral 100 according to the first exemplary embodiment. The soft modules illustrated in Fig. 3 are implemented by causing the CPU 201 to execute programs loaded into the RAM 203.

A network driver 301 controls the network I/F control unit 205 connected to the network 110 to transmit and receive data to and from an external device via the network 110. A network control unit 302 controls communication in the transport layer or lower layers of a network communication protocol, such as TCP/IP, to transmit and receive data. A communication control unit 303 is a module for controlling a plurality of communication modules supported by the multifunction peripheral 100. In electronic certificate acquisition and update processing according to the first exemplary embodiment, the communication control unit 303 controls a request for communication by an HTTP or SOAP protocol, generation of response data, analysis processing, and transmission and reception of data, to execute communication with the certificate authority/registration authority 102 and the PC 103. The encryption communication by TLS, IPSEC, or IEEE802.1X supported by the multifunction peripheral 100 is also executed by the communication control unit 303.

A web page control unit 304 is a module for generating HTML data for displaying a web page allowing execution of processing for requesting the issuance of an electronic certificate and acquiring the electronic certificate, and performing communication control. The web page control unit 304 executes processing on a web page display request, an electronic certificate issuance request, and an acquisition execution instruction which are transmitted from the network driver 301 through the communication control unit 303. The web page control unit 304 transmits, as a response to the request from the web browser, HTML data on a default web page stored in the RAM 203 or the HDD 204, or HTML data generated according to the content of the display request.

An acquisition control unit 305 is a module for executing electronic certificate acquisition processing based on an instruction from the web page control unit 304. The acquisition control unit 305 performs processing, such as storing of setting values related to the electronic certificate acquisition processing, communication control by the SCEP, processing for generating and analyzing encrypted data necessary for communication by the SCEP, such as PKCS#7 and PKCS#10, storing of acquired electronic certificates, and use setting. An encryption processing unit 306 is a module for executing various encryption processing, such as data encryption and decryption processing, electronic signature generation and verification processing, and Hash value generation processing.

The encryption processing unit 306 executes various encryption processing necessary for request/response data generation and analysis processing by the SCEP in the electronic certificate acquisition and update processing according to the first exemplary embodiment.

A key pair/certificate management unit 307 is a module for managing the public key pair and electronic certificate held by the multifunction peripheral 100. The key pair/certificate management unit 307 stores data on the public key pair and electronic certificate in the RAM 203 or the HDD 204 together with various setting values. Although not illustrated in the first exemplary embodiment, processing such as detailed display, generation, and deletion of the public key pair and electronic certificate can also be executed according to an instruction from the user through the control panel 212.

The control for the control panel 212 and the panel control unit 208 is executed by a user interface (UI) control unit 309. Also, in the encryption communication processing by TLS, IPSEC, IEEE802.1X, or the like executed by the communication control unit 303, the encryption processing is performed by the encryption processing unit 306. Also, in such encryption communication processes, the data on the public key pair and electronic certificate to be used is acquired from the key pair/certificate management unit 307.

A setting distribution control unit 308 performs processing for transmitting data on setting values related to the electronic certificate acquisition processing based on a setting value acquisition request from the PC 103. Further, the setting distribution control unit 308 performs processing for storing and setting setting values distributed from the PC 103 as setting values for the multifunction peripheral 100 based on a setting value distribution/setting request from the PC 103.

A print/read processing unit 310 is a module for executing functions, such as printing by the printer 210 and reading of a document by the scanner 211. A device control unit 311 is a module for generating a control command and control data for the multifunction peripheral 100 to control the multifunction peripheral 100 in an integrated manner.

Fig. 4 is a block diagram illustrating the hardware configuration of the PC 103 according to the first exemplary embodiment.

A CPU 401 executes software programs for the PC 103 to control the entire apparatus. A ROM 402 is a read only memory and stores a boot program, fixed parameters, and the like for the PC 103. A RAM 403 is a random access memory and is used to, for example, store programs and temporarily store data when the CPU 401 controls the PC 103. An HDD 404 is a hard disk drive and stores system software, applications, and various data. The CPU 401 executes the boot program stored in the ROM 402, loads programs stored in the HDD 404 into the RAM 403, and executes the loaded programs to control the operation of the PC 103.

A network I/F control unit 405 controls transmission and reception of data via the network 110. A UI control unit 406 controls input processing by operating a mouse 409 or a keyboard 410. A display unit 407 controls a display 411 to control display of various pieces of information. A bus 408 connects the CPU 401, the ROM 402, the RAM 403, the HDD 404, the network I/F control unit 405, the UI control unit 406, and the display unit 407 to each other. Control signals from the CPU 401 and data signals to be exchanged between devices are transmitted and received via the bus 408.

Fig. 5 is a block diagram illustrating software modules included in the PC 103 according to the first exemplary embodiment. The software modules illustrated in Fig. 5 are implemented by causing the CPU 401 to execute programs loaded into the RAM 403.

A network driver 501 controls the network I/F control unit 405 connected to the network 110 to transmit and receive data to and from an external device via the network 110. A network control unit 502 controls communication in the transport layer or lower layers of a network communication protocol, such as TCP/IP, to transmit and receive data. A communication control unit 503 is a module for controlling a plurality of communication protocols supported by the PC 103. In the electronic certificate acquisition and update processing according to the first exemplary embodiment, the communication control unit 503 generates a request for communication by the HTTP or SOAP protocol and response data, and controls analysis processing and transmission and reception of data, to execute communication with the multifunction peripheral 100.

A web browser 504 is a web browser application for displaying and operating web pages published by the multifunction peripheral 100.

A distribution control application 505 is an application having a function for acquiring and distributing setting values related to the certificate automatic acquisition/update processing of the multifunction peripheral 100.

A display control unit 506 controls a screen to be displayed on the display 411 by the web browser 504 or the distribution control application 505.

A UI control unit 507 controls the mouse 409 and the keyboard 410 for performing various operations for the web browser 504 and the distribution control application 505.

Fig. 6 is a sequence diagram illustrating the processing procedure of certificate automatic acquisition/update setting processing, processing of distributing a setting to other devices, and certificate issuance request and reception processing based on the distributed setting in a system according to the first exemplary embodiment.

First, in step S601, upon acceptance of the connection from the PC 103, the multifunction peripheral 100 receives a key pair/electronic certificate list display request that is transmitted from the PC 103 and held in the multifunction peripheral 100. Assume in the first exemplary embodiment that the administrator of the multifunction peripheral 100 uses the web browser mounted on the PC 103 to connect to a web page for requesting the issuance of an electronic certificate and acquiring the electronic certificate published by the multifunction peripheral 100, to perform operations such as instruction. RUI is an abbreviation for a remote user interface and is a user interface to be displayed on the PC 103 by using the web browser of the PC 103 and remotely requesting operation screen data on the multifunction peripheral 100. In this case, the screen can be implemented by HTML, servlet, or the like.

Figs. 7A to 7D each illustrate an example of an RUI screen published on the network by the multifunction peripheral 100 according to the first exemplary embodiment. Assume that the web page control unit 304 illustrated in Fig. 3 according to the first exemplary embodiment generates HTML data on web page screens illustrated in Figs. 7A to 7D and the web page screens are displayed on the display 411 by the web browser of the PC 103. Displaying the screens, inputting setting values, and changing setting values allow confirmation of a key pair/electronic certificate list held by the multifunction peripheral 100 and execution of certificate automatic acquisition/update setting through the PC 103.

Fig. 7A illustrates a list of electronic certificate information that is held by the multifunction peripheral 100 and displayed on the web browser. The list includes a certificate name 711, a use 712, an issuer 713, a validity period end date 714, and certificate details 715.

The name 711 represents a character string that is arbitrarily provided by an operator, such as the administrator of the multifunction peripheral 100, during issuance of a key pair and an electronic certificate.

The use 712 represents a setting value indicating that the key pair and electronic certificate are used for any one of TLS, IPSEC, and IEEE802.1X.

The issuer 713 represents the distinguished name (DN) of the certificate authority that has issued the electronic certificate. The validity period end date 714 represents information about the date when a validity period for the electronic certificate has expired.

The details 715 represent an icon for shifting to a screen (Fig. 7D) for displaying other detailed information included in the electronic certificate.

Fig. 7B illustrates a connection setting screen that is displayed on the web browser and used for the multifunction peripheral 100 to connect to the certificate authority/registration authority 102. The connection setting screen includes the following items. Specifically, the connection setting screen includes input fields for a server name 716 and a port number 717 to input a host name and a connection destination port number of a server on which a certificate issuance service provided by the certificate authority/registration authority 102 is operated, and a setting button 718 for instructing setting of input setting values. The multifunction peripheral 100 connects to the certificate authority/registration authority 102 based on information set and stored on the screen.

Fig. 7C illustrates a reserved setting screen that is displayed on the web browser and used for the multifunction peripheral 100 to perform electronic certificate automatic acquisition/update processing. The reserved setting screen displays the following setting values for the multifunction peripheral 100 to perform the electronic certificate automatic acquisition/update processing on the set date and time.

A starting date/time 719 is a field for inputting the date and time when the multifunction peripheral 100 starts the electronic certificate automatic acquisition/update processing. The multifunction peripheral 100 can accept a setting about an electronic certificate acquisition request timing to the certificate authority through the starting date/time 719. In the present exemplary embodiment, the starting date and time is input through the web browser displayed on the PC 103 and information input to the multifunction peripheral 100 from the PC 103 is transmitted via the network.

A request timing automatic adjustment setting 720 is a field for inputting a setting for enabling a request timing automatic adjustment.

Even when the same starting date and time is set to a plurality of multifunction peripherals from the PC 103, each multifunction peripheral shifts the request timing based on the request timing automatic adjustment setting, whereby the plurality of multifunction peripherals is prevented from transmitting electronic certificate acquisition requests at once on the same date and time. Accordingly, it is possible to suppress a rapid increase in the traffic of the network and to distribute a processing load of the certificate authority/registration authority 102.

In the first exemplary embodiment, when a setting 720(a) for enabling the request timing automatic adjustment is checked, the date and time to which a random time calculated by the multifunction peripheral 100 within the range of an adjustment interval 720(b) is provided is set as the starting date/time for the electronic certificate acquisition request, in addition to the starting date/time 719. As the adjustment interval 720(b), a range (time width) in which the time set as the starting date/time 719 can be changed is designated. The adjustment interval 720(b) can be preliminarily set in the multifunction peripheral 100.

The multifunction peripheral 100 can accept the setting (range information) about the time width in which the timing for the electronic certificate acquisition request is changed through the adjustment interval 720(b). In the present exemplary embodiment, the range information is input through the web browser displayed on the PC 103, and the information input from the PC 103 to the multifunction peripheral 100 is transmitted via the network. The range information can be determined by the PC 103 based on the number of multifunction peripherals connected to the PC 103 and transmitted to each of the multifunction peripherals from the PC 103.

A regular update setting 721 is a field for inputting setting values for the multifunction peripheral 100 to regularly perform the certificate automatic acquisition/update processing.

In the first exemplary embodiment, when a setting 721(a) for enabling the regular update setting is checked, the next electronic certificate automatic update date/time is set by the following method. That is, the next electronic certificate update date and time is set by adding the number of months of the update interval set in an update interval 721(b) to the time calculated based on the date and time set in the starting date/time 719 and the request timing automatic adjustment setting 720.

A next request date/time 722 is a field for displaying the date and time which is calculated based on the setting values 719, 720, and 721 and on which the electric certificate automatic acquisition/update processing is actually performed. In this manner, the CPU 201 performs display control for causing the display unit to display the timing determined based on the setting (e.g., the starting date/time 719) about the acquisition timing received from the PC 103 and change information (random number information and range information).

Electronic certificate acquisition request information 723 is a field for inputting each setting information included in the certificate issuance request to be transmitted to the certificate authority/registration authority 102.

In the example illustrated in Fig. 7C, the electronic certificate acquisition request information 723 includes settings about the name of a certificate, the key length of a key pair to be generated, issuance destination information, signature verification, use of a key, and a password.

The signature verification is a setting about whether to verify a signature provided in response to the certificate issuance request transmitted from the certificate authority/registration authority 102.

The key use setting is a setting about the use of the issued electronic certificate. As the use of the electronic certificate, for example, a communication method, such as TLS, IPSEC, or IEEE802.1X, can be used.

The password is authentication information that is included in the issuance request to be transmitted in the case of requesting the issuance of an electronic certificate. The certificate authority/registration authority 102 issues a signed electronic certificate when it is confirmed that the password included in the issuance request is a predetermined password.

A setting button 724 is a button for storing the settings described above in the multifunction peripheral 100 and starting the electronic certificate automatic acquisition/update processing. The setting values are stored in the RAM 203 or the HDD 204.

In step S602, the multifunction peripheral 100 displays the connection setting screen illustrated in Fig. 7B and the reserved setting screen illustrated in Fig. 7C, stores the setting values according to a setting value input instruction, and starts and executes certificate automatic acquisition/update timer processing according to the RUI operation from the PC 103. In step S602, the multifunction peripheral 100 accepts, from the PC 103, the setting about the timing for an electronic certificate acquisition request to the certificate authority, as a reserved setting.

The above-described steps correspond to the certificate automatic acquisition/update setting processing to be performed by the multifunction peripheral 100. Subsequent steps correspond to processing for distributing and setting the setting values set in steps S601 and S602 to the multifunction peripheral 104.

In step S603, the multifunction peripheral 100 receives, from the PC 103, the certificate automatic acquisition/update setting value acquisition request set and stored in step S602. Assume in the first exemplary embodiment that the administrator of the multifunction peripheral 100 performs the operation of acquiring the certificate automatic acquisition/update setting value set in the multifunction peripheral 100 by using the distribution control application 505 installed in the PC 103. In the first exemplary embodiment, the certificate automatic acquisition/update setting value is acquired using the distribution control application 505, but instead the certificate automatic acquisition/update setting value can be acquired from the RUI by using the web browser of the PC 103.

Figs. 8A and 8B each illustrate an example of a screen for the PC 100 according to the first exemplary embodiment to acquire the certificate automatic acquisition/update setting value from the multifunction peripheral 100. The screens are displayed on the display 411 by the distribution control application 505 installed in the PC 103. Displaying the screens, inputting setting values, and changing the setting values allow execution of an operation for acquiring the certificate automatic acquisition/update setting value from the multifunction peripheral 100 through the PC 103.

Fig. 8A illustrates an example of a screen for acquiring the certificate automatic acquisition/update setting value from the multifunction peripheral 100. An acquisition destination device 801 is a field for inputting the host name or Internet Protocol (IP) address of the connection designation of the multifunction peripheral 100. When an acquisition button 802 is pressed, the certificate automatic acquisition/update setting value acquisition request obtained in step S603 is transmitted from the PC 103 to the multifunction peripheral 100. The acquired setting value data is stored in the RAM 403 or the HDD 404.

HTTP and SOAP protocols are used as communication protocols for transmission and reception of data between the PC 103 and the multifunction peripheral 100 according to the first exemplary embodiment, but instead other communication protocols can be used. In the first exemplary embodiment, the host name or IP address of the connection designation of the multifunction peripheral 100 is manually input, but the method for acquiring the destination information is not limited to this. The destination information about the connection destination can be acquired by searching for the multifunction peripheral 100 on the network by using a communication protocol, such as SNMP, WSD, or UPnP.

Upon reception of the certificate automatic acquisition/update setting value acquisition request in step S603, in step S604, the multifunction peripheral 100 performs processing for generating transmission data on certificate automatic acquisition/update setting value set in the multifunction peripheral 100. In step S605, the multifunction peripheral 100 transmits the data generated in step S604 to the PC 103.

Fig. 8B illustrates an example of a screen to be displayed when the certificate automatic acquisition/update setting value acquisition processing of step S605 is executed by the distribution control application 505. An acquisition processing result message 803 is displayed on the screen. In the first exemplary embodiment, the screen displays only the acquisition processing result message, but instead can display acquired setting values.

Fig. 9 illustrates an example of transmission data on the certificate automatic acquisition/update setting value generated by the multifunction peripheral 100 in step S604. The data includes the server name 716 and the port number 717, which are illustrated in Fig. 7B, and the starting date/time 719, the request timing automatic adjustment 720, the regular update setting 721, and the electronic certificate acquisition request information 723, which are illustrated in Fig. 7C, in an XML format. In the first exemplary embodiment, the setting values are described in the XML format, but instead can be described in other data formats. The starting date/time 719 is a setting area for inputting a setting about a timing for the multifunction peripheral 100 for an electronic certificate acquisition request to the certificate authority.

Next, in step S606, the PC 103 performs certificate automatic acquisition/update setting value distribution/setting request processing on the multifunction peripheral 104. In the flowchart, the processing is performed only on the multifunction peripheral 104, but instead processing similar to that for the multifunction peripheral 104 can also be performed on multifunction peripherals 105 and 106. The data to be transmitted in step S606 is data that is illustrated in Fig. 9 and acquired from the multifunction peripheral 100 in step S605.

Figs. 10A and 10B each illustrate an example of a screen for the PC 103 according to the first exemplary embodiment to distribute and set the certificate automatic acquisition/update setting value acquired from the multifunction peripheral 100 to each of the multifunction peripherals 104, 105, and 106. The screens illustrated in Figs. 10A and 10B are displayed on the display 411 by the distribution control application 505 installed in the PC 103. Displaying the screens, inputting setting values, and changing setting values allow execution of an operation for distributing the setting values acquired from the multifunction peripheral 100 to the other multifunction peripherals 104, 105, and 106 through the PC 103.

Fig. 10A illustrates a list of multifunction peripherals to which setting values are distributed. A distribution 1001 is a checkbox for setting whether to distribute a setting to each multifunction peripheral on the list.

A device name 1002 represents a name character string for identifying each device. A connection destination 1003 represents a setting value for the host name or IP address of the connection destination of each device. The setting values displayed on the list are stored in the RAM 403 or the HDD 404. A distribution result 1004 is a field in which the result of the distribution is displayed. When a distribution button 1005 is pressed, the certificate automatic acquisition/update setting distribution/setting request and data to be transmitted in step S606 are transmitted from the PC 103 to the multifunction peripherals for which the distribution 1001 is checked.

HTTP and SOAP protocols are used as communication protocols for transmission and reception of data between the PC 103 and the multifunction peripherals 104, 105, and 106 according to the first exemplary embodiment, but instead other communication protocols can be used. In the first exemplary embodiment, the device name of each of the multifunction peripherals 104, 105, and 106 illustrated in Fig. 10A and the host name or IP address of the connection designation of each multifunction peripheral are set in advance. However, the setting values can be acquired by searching for each multifunction peripheral on the network by using a communication protocol, such as SNMP, WSD, or UPnP.

Upon reception of a certificate automatic acquisition/update setting value distribution/setting request in step S606, in step S607, the multifunction peripheral 104 sets and stores the setting values included in the received data as the certificate automatic acquisition/update setting value set in the multifunction peripheral 104. Then, the certificate automatic acquisition/update timer processing is started. In step S608, the processing result of step S607 is transmitted to the PC 103 as a response of step S606.

Fig. 10B illustrates an example of a screen to be displayed when the processing of steps S606, S607, and S608 is executed. The result of certificate automatic acquisition/update setting distribution/setting processing is displayed in the distribution result 1004.

The multifunction peripheral 104 executes the certificate automatic acquisition/update timer processing based on the setting value set in step S607.

The above-described steps correspond to the processing for distributing and setting the setting value set in steps S601 and S602 to the multifunction peripheral 104. Subsequent steps correspond to the certificate issuance request generation processing and the certificate data acquisition and setting processing of the multifunction peripheral 104 to be executed by the distributed setting value and timer processing.

The multifunction peripheral 104 starts the electronic certificate issuance request generation processing in step S609 on the date and time set by the timer processing.

Further, in step S610, data on the electronic certificate issuance request (acquisition request) generated in step S609 is transmitted to the certificate authority/registration authority 102 by the SCEP protocol. In the present exemplary embodiment, in step S602, the timing for the electronic certificate acquisition request is determined based on the electronic certificate acquisition request timing setting received from the PC 103, random number information described below, and range information indicating a time width in which the timing is changed. The electronic certificate issuance request is made at the determined timing. The random number information is generated by the multifunction peripheral 100 in step S1405 described below. The range information can be set by the administrator or user from the setting item 720(b), which is described below, in the present exemplary embodiment. Information including the random number information and range information is hereinafter referred to as change information.

In step S611, the multifunction peripheral 104 receives a response to the certificate issuance request (acquisition request) transmitted from the certificate authority/registration authority 102 (acquisition request). In this manner, the multifunction peripheral 104 acquires an electronic certificate as a response to the electronic certificate acquisition request.

In step S612, the multifunction peripheral 104 performs processing for acquiring a certificate based on the response result of step S611 and setting the certificate data to the multifunction peripheral 104.

Fig. 11 is a flowchart illustrating certificate automatic acquisition/update setting value acquisition request processing to be executed by the PC 103 in steps S603 and S605 illustrated in Fig. 6. This processing is achieved by causing the CPU 401 to execute a program for the distribution control application 505 loaded into the RAM 403.

This processing is started when the acquisition button 802 illustrated in Fig. 8A is pressed. First, in step S1101, the CPU 401 connects to the multifunction peripheral 100 by the PCT/IP protocol based on the setting of the acquisition destination device 801 illustrated in Fig. 8A.

In step S1102, it is determined whether the connection is successful. In a case where the connection is successful (YES in step S1102), the processing proceeds to step S1103. In a case where the connection is unsuccessful (NO in step S1102), the processing proceeds to step S1108.

In step S1103, the CPU 401 transmits a certificate automatic setting value acquisition request by an HTTP/SOAP protocol.

In step S1104, the CPU 401 determines whether the transmission of the setting value acquisition request is successful. In a case where the transmission is successful (YES in step S1104), the processing proceeds to step S1105. In a case where the transmission is unsuccessful (NO in step S1104), the processing proceeds to step S1108.

In step S1105, the CPU 401 receives a response from the multifunction peripheral 100. In step S1106, it is determined whether the reception of the response is successful. In a case where the reception of the response is successful (YES in step S1106), the processing proceeds to step S1107. In a case where the reception of the response is unsuccessful (NO in step S1106), the processing proceeds to step S1108.

In step S1107, the CPU 401 stores the received data (Fig. 9) included in the response in the RAM 403 or the HDD 404.

In step S1108, the result according to the processing of each step is displayed as illustrated in Fig. 8B and then the processing is terminated.

Fig. 12 is a flowchart illustrating certificate automatic acquisition/update setting value transmission processing to be executed by the multifunction peripheral 100 in steps S603, S604, and S605 illustrated in Fig. 6. This processing is achieved by causing the CPU 201 to execute a program for the setting distribution control unit 308 loaded into the RAM 203.

First, in step S1201, the CPU 201 waits for communication connection to the multifunction peripheral 100. In a case where the CPU 201 has received the connection from the PC 103 and the certificate automatic acquisition/update setting value acquisition request by the HTTP/SOAP protocol, the processing proceeds to step S1202. Further, the CPU 201 generates data illustrated in Fig. 9 based on the setting value illustrated in Fig. 6. Next, in step S1203, the CPU 201 transmits the data generated in step S1202 to the PC 103 as a response to the PC 103 and then the processing is terminated.

Fig. 13 is a flowchart illustrating certificate automatic acquisition/update setting value distribution/setting request processing to be executed by the PC 103 in steps S606 and S608 illustrated in Fig. 6. This processing is achieved by causing the CPU 401 to execute a program for the distribution control application 505 loaded into the RAM 403.

This processing is started when the distribution button 1005 illustrated in Fig. 10A is pressed. First, in step S1301, the CPU 401 refers to the list illustrated in Fig. 10A and acquires connection information (e.g., an IP address) of the multifunction peripheral on the top of the list.

Next, in step S1302, it is determined whether the multifunction peripheral selected in step S1301 is the multifunction peripheral to which the certificate automatic acquisition/update setting value is distributed through the PC 103. The determination method is not particularly limited. For example, information indicating the multifunction peripherals to which the setting value is distributed is held by the PC 103 and thus the determination of step S1302 can be made based on the list of the multifunction peripherals. In a case where the multifunction peripheral listed on the top is set as a distribution target (YES in step S1302), the processing proceeds to step S1303. In a case where the multifunction peripheral listed on the top is not set as a distribution target (NO in step S1302), the processing proceeds to step S1309.

In step S1303, the CPU 401 establishes a connection by the TCP/IP protocol based on the connection destination information about the distribution target multifunction peripheral acquired in step S1301. In step S1304, it is determined whether the connection processing in step S1303 is successful. In a case where the connection is successful (YES in step S1304), the processing proceeds to step S1305. In a case where the connection is unsuccessful (NO in step S1304), the processing proceeds to step S1308.

In step S1305, the CPU 401 transmits the certificate automatic acquisition/update setting value distribution/setting request by the HTTP/SOAP protocol. In step S1306, the CPU 401 determines whether the transmission is successful. In a case where the transmission is successful (YES in step S1305), the processing proceeds to step S1307. In a case where the transmission is unsuccessful (NO in step S1305), the processing proceeds to step S1308.

In step S1307, the CPU 401 receives a response from the multifunction peripheral 100. After reception of the response, the processing proceeds to step S1308 and the processing results based on the processing of each step are temporarily stored in the RAM 403.

In step S1309, the CPU 401 refers to the list illustrated in Fig. 10A and acquires the setting value of the next multifunction peripheral set in the list. In step S1310, the CPU 401 determines whether the distribution of the setting value to all multifunction peripherals set in the list is completed. In a case where the distribution of the setting value to all multifunction peripherals is not completed (NO in step S1310), the processing proceeds to step S1302. In a case where the distribution of the setting value to all multifunction peripherals is completed (YES in step S1310), the processing proceeds to step S1311. In step S1311, the CPU 401 displays the processing result stored in step S1308 in the distribution result 1004 illustrated in Fig. 10B and then the processing is terminated.

Fig. 14 is a flowchart illustrating certificate automatic acquisition/update setting value distribution/setting processing to be executed by the multifunction peripheral 104 in steps S606, S607, and S608 illustrated in Fig. 6. This processing is achieved by causing the CPU 201 to execute a program for the setting distribution control unit 308 loaded into the RAM 203.

First, in step S1401, the CPU 201 waits for connection of communication to the multifunction peripheral 104. When the CPU 201 has received the connection from the PC 103, the certificate automatic acquisition/update setting value acquisition request by the HTTP/SOAP protocol, and the setting value data (Fig. 9), the processing proceeds to step S1402.

In step S1402, the CPU 201 analyzes the data received in step S1401 and acquires each setting value.

In step S1403, the CPU 201 determines whether the setting 720(a) for enabling the request timing automatic adjustment illustrated in Fig. 7C as a result of analysis in step S1402 is valid. In a case where the setting 720(a) for enabling the automatic adjustment is valid (YES in step S1403), the processing proceeds to step S1404. In a case where the setting is not valid (NO in step S1403), the processing proceeds to step S1408.

In step S1404, the CPU 201 acquires, from the network control unit 302, a media access control (MAC) address of the multifunction peripheral 104 as a random number seed value. In the first exemplary embodiment, the MAC address of each multifunction peripheral is used as the random number seed value in a setting unique to the multifunction peripheral. However, the random number seed value is not limited to this. A product serial number, an IP address, and the like of each multifunction peripheral, and values unique to the multifunction peripheral can also be used as the random number seed value. Alternatively, a combination of values unique to a plurality of multifunction peripherals can be used as the random number seed value, or a true random number for which a seed is not designated can be used.

In step S1405, the CPU 201 generates a random number using the random number seed generated in step S1404 by the encryption processing unit 306, and then the processing proceeds to step S1406. The random number is used as a part of change information for changing the timing for performing the electronic certificate acquisition request. In the present exemplary embodiment, as described above, the CPU 201 generates at least a part (e.g. random number information) of the change information based on information different from the setting accepted as a setting for the electronic certificate acquisition request timing. The information different from the setting accepted as a setting for the electronic certificate acquisition request timing setting is information unique to the multifunction peripheral 100, such as the above-described MAC address, product serial number, and IP address.

In step S1406, the CPU 201 calculates an additional time (change information) from the setting of the random number value generated in step S1405 and the adjustment range 720(b) illustrated in Fig. 7C. In a method for calculating the additional time according to the first exemplary embodiment, the random number value generated in step S1405 is divided by the number of seconds of the adjustment range setting value, and the calculation result is added to the number of seconds to be added. For example, when the setting of the adjustment range 720(b) indicates 60 minutes (3600 seconds) and the generated random number is 5029395, 195 seconds are added to the certificate acquisition request date and time by the following calculation.

$$5029395 \bmod 60 \times 60 \text{ (seconds)} = 195 \text{ (seconds)}$$

In step S1407, the CPU 201 performs processing for adding the time calculated in step S1406 to the certificate acquisition request date and time, and then the processing proceeds to step S1408. In step S1408, the CPU 201 compares the current time set to the multifunction peripheral with the certificate acquisition request date and time in step S1407.

In step S1409, the CPU 201 determines whether the certificate acquisition request date and time can be set to the multifunction peripheral based on the result of comparison in step S1408. In step S1409, in a case where the calculated time is a time before the current time (NO in step S1409) as a result of comparison, the CPU 201 determines that a setting error has occurred, and the processing proceeds to step S1412. In a case where the time is settable (YES in step S1409), the processing proceeds to step S1410.

In step S1410, the CPU 201 stores the certificate acquisition request date and time, and then the processing proceeds to step S1411 to start timer processing for transmitting the certificate acquisition request at a designated time. In step S1412, the CPU 201 transmits a response according to the processing result of each step, and then the processing is terminated.

Fig. 15 is a diagram including the flowcharts of Fig. 15A and Fig. 15B illustrating certificate issuance request/acquisition processing to be performed by the multifunction peripheral 104 according to the first exemplary embodiment in steps S609 to S612 illustrated in Fig. 6. This processing is achieved by causing the CPU 201 to execute a program loaded into the RAM 203.

First, in step S1501, the CPU 201 starts processing at the start time of the designated certificate acquisition request, and acquires the setting information of the electronic certificate acquisition request information 723 which is illustrated in Fig. 6 and stored in the RAM 203 or the HDD 204.

Next, in step S1502, the CPU 201 acquires the CA certificate of the certificate authority/registration authority 102 preliminarily stored in the RAM 203 or the HDD 204 of the multifunction peripheral 104. Further, in step S1503, the CPU 201 generates a key pair based on the information acquired in step S1502. The key pair is used for the multifunction peripheral 100 to communicate encrypted communication data with another device. Further, the CPU 201 causes the encryption processing unit 306 to generate certificate signature request data in a PKSC#10 (RFC2986) format. The certificate signature request data may be represented as Certificate Signing Request (CSR). The CSR is generated based on the generated key pair.

Next, in step S1504, the CPU 201 determines whether the generation of the key pair/certificate signature request in step S1503 is successful. In a case where it is determined that the generation is successful (YES in step S1504), the processing proceeds to step S1505. In a case where the generation is unsuccessful (NO in step S1504), the processing of step S1522 is carried out and then the processing proceeds to step S1523. In step S1522, the CPU 201 performs error processing. In the error processing, the CPU 201 notifies the user that predetermined processing has not been normally executed.

In step S1505, the CPU 201 generates certificate issuance request data. The acquisition request data generated in step S1505 is data of a PKCS#7 format defined in the SCEP based on the setting for connection to the certificate authority/registration authority 102 set in Fig. 7B.

Next, in step S1507, the CPU 201 connects to the certificate authority/registration authority 102, which is an SCEP server, by the TCP/IP protocol based on the setting for connection to the certificate authority/registration authority 102 set in Fig. 7B.

Next, in step S1508, the CPU 201 determines whether the connection in step S1507 is successful. In a case where the connection is successful (YES in step S1508), the processing proceeds to step S1509. In a case where the connection is unsuccessful (NO in step S1508), the processing proceeds to step S1523.

In step S1509, the CPU 201 transmits the certificate issuance request data generated in step S1505 by a GET or POST method of the HTTP protocol.

Further, in step S1510, the CPU 201 determines whether the transmission in step S1509 is successful. In a case where the transmission is successful (YES in step S1510), the processing proceeds to step S1511. In a case where the transmission is unsuccessful (NO in step S1510), the processing of step S1522 is carried out and then the processing proceeds to step S1523.

In step S1511, the CPU 201 receives response data for the certificate issuance request from the certificate authority/registration authority 102. As the response data defined in the SCEP, data in a PKCS#7 format is transmitted as the response.

Next, in step S1512, the CPU 201 determines whether the reception of response data in step S1511 is successful. In a case where the reception is successful (YES in step S1512), the processing proceeds to step S1513. In a case where the reception is unsuccessful (NO in step S1512), the processing of step S1522 is carried out and then the processing proceeds to step S1523.

In step S1513, the CPU 201 determines whether the setting for signature verification is made based on the setting of the signature verification acquired in step S1501. In a case where the setting for signature verification is made (YES in step S1513), the processing proceeds to step S1514. In a case where the setting for signature verification is not made, the processing proceeds to step S1516.

In step S1514, the CPU 201 verifies the signature data provided to the data received in step S1511 by using the public key included in the CA certificate acquired in step S1502.

Further, in step S1515, the CPU 201 determines whether the result of signature verification in step S1514 is successful. In a case where the signature verification is successful (YES in step S1515), the processing proceeds to step S1516. In a case where the signature verification is unsuccessful (NO in step S1515), the processing of S1522 is carried out and then the processing proceeds to step S1523.

In step S1516, the CPU 201 analyzes the data received in step S1511 and acquires the certificate data included in the response data. In this case, the encryption processing unit 306 performs processing for analyzing the response data and acquiring the certificate.

Next, in step S1517, the CPU 201 determines whether the acquisition of the certificate in step S1516 is successful. In a case where the acquisition is successful (YES in step S1517), the processing proceeds to step S1518. In a case where the acquisition is unsuccessful (NO in step S1517), the processing of S1522 is carried out and then the processing proceeds to step S1523.

In step S1518, the CPU 201 registers the certificate acquired in step S1517 as the electronic certificate corresponding to the key pair generated in step S1503. In this case, the CPU 201 causes the key pair/certificate management unit 307 to store the public key pair generated in step S1503 and the acquired electronic certificate in a predetermined directory for storing the key pair and electronic certificate in the HDD 204. In this case, the key pair/certificate management unit 307 adds the information about the public key pair generated in step S1503 and the acquired electronic certificate to the list of key pair/certificate detailed information illustrated in Fig. 7A.

Next, in step S1519, the CPU 201 determines whether the CA certificate registration processing in step S1518 is successful. In a case where the registration processing is successful (YES in step S1519), the processing proceeds to step S1520. In a case where the registration processing is unsuccessful (NO in step S1519), the processing of step S1522 is carried out and then the processing proceeds to step S1523.

In step S1520, the CPU 201 sets the use of the electronic certificate based on the information about the use of the key acquired in step S1501. In this case, the key pair/certificate management unit 307 updates the information about the use in the list of key pair/certificate detailed information as illustrated in, for example, Fig. 7A.

Next, in step S1523, the CPU 201 stores, in the HDD 204, the result according to the processing result of steps S1501 to S1523 as log information about the multifunction peripheral 104.

In step S1524, it is determined whether the regular update setting acquired in step S1501 is valid. In a case where the regular update setting is valid (YES in step S1524), the processing proceeds to step S1525. In step S1525, regular update setting processing is performed and then the processing is terminated. If the regular update setting is valid, as described above in step S610 of Fig. 6, the electronic certificate signature request is made at the update timing. Then, as described above in step S611, a response is acquired from the certificate authority/registration authority 102. This response includes the electronic certificate with an electronic signature.

Fig. 16 is a flowchart illustrating next certificate update date/time determination/setting processing to be executed by the multifunction peripheral 104 in step S1525 illustrated in Fig. 15. This processing is achieved by causing the CPU 201 to execute a program for the setting distribution control unit 308 loaded into the RAM 203.

First, in step S1601, the CPU 201 acquires the setting of the currently set starting date/time 719 illustrated in Fig. 7C and the setting of the update interval 721(b), and then the processing proceeds to step S1602.

In step S1602, the CPU 201 calculates the starting date/time 719 for the next certificate by adding the number of months of the update interval 721(b) to the starting date/time 719 acquired in step S1601.

In step S1603, the CPU 201 acquires the setting 720(a) for enabling the request timing automatic adjustment in Fig. 7C.

In step S1604, the CPU 201 determines whether the setting for performing the automatic adjustment is valid. In a case where the setting is valid, the processing proceeds to step S1605. If the setting is not valid, the processing proceeds to step S1610.

In step S1605, the CPU 201 acquires, from the network control unit 302, the MAC address of the multifunction peripheral 104 as the Seed value of the random number. In the first exemplary embodiment, the MAC address of each multifunction peripheral is used as the random number seed value in a setting unique to the multifunction peripheral. However, the random number seed value is not limited to this. In addition to the product serial number, IP address, and the like of each multifunction peripheral, values unique to the multifunction peripheral may be used as the random seed value. A combination of values unique to a plurality of multifunction peripherals can be used as the random number seed value.

In step S1606, the CPU 201 generates a random number using the random number Seed generated by the encryption processing unit 306 in step S1605, and the processing proceeds to step S1607.

In step S1607, the CPU 201 calculates an additional time from the random number value generate in step S1606 and the setting of the adjustment range 720(b) illustrated in Fig. 7C. In a method for calculating the additional time according to the first exemplary embodiment, the random number value generated in step S1607 is divided by the number of seconds of the adjustment range setting value, and the calculation result is added to the number of seconds to be added.

In step S1608, the CPU 201 performs processing for adding the time calculated in step S1607 to the certificate acquisition request date and time, and then the processing proceeds to step S1609. In step S1609, the CPU 201 stores the calculated certificate acquisition request date and time, and the processing proceeds to step S1610. The timer processing for transmitting the certificate acquisition request is started at the designated time and then the processing is terminated.

As described above, according to the first exemplary embodiment, even when the certificate automatic acquisition/update setting value is distributed to a plurality of multifunction peripherals, each multifunction peripheral automatically changes the acquisition timing within a designated range. Accordingly, it is possible to prevent concentration of traffic and prevent troubles, such as a delay in response from the server, or interruption of certificate authority services, due to transmission of issuance requests that cannot be processed by the server of the certificate authority. In other words, even when the electronic certificate acquisition timing is set to a plurality of information processing apparatuses at once, it is possible to stably add or update an electronic certificate while preventing the occurrence of congestion in the network and the occurrence of a failure in the server.

Next, a second exemplary embodiment of the present invention will be described. The second exemplary embodiment illustrates control for automatically setting an adjustment range according to the number of multifunction peripherals to which a setting is distributed, instead of controlling the setting about the time range (width) for adjusting the electronic certificate acquisition request date and time according to an instruction from a user as described above in the first exemplary embodiment. Specifically, in the present exemplary embodiment, the range information is determined based on the number of information processing apparatuses (multifunction peripherals 100 to 105) connected to the PC 103 (setting apparatus). The range information corresponds to information set from the setting item of the update interval 721(b) in the first exemplary embodiment. The PC 103 is a setting apparatus that sets a timing for an electronic certificate acquisition request to the certificate authority to the information processing apparatus via the network.

The network configuration, the hardware configuration of the multifunction peripheral 100, which is an information processing apparatus, and the PC 103, and the software configuration in the second exemplary embodiment are the same as those in the first exemplary embodiment, and thus descriptions thereof are omitted. Further, the distribution control application display and setting processing, the certificate automatic setting and update setting value acquisition and distribution/setting request processing, the certificate issuance request/acquisition processing, and the like in the second exemplary embodiment are the same as those in the first exemplary embodiment, and thus descriptions thereof are omitted.

Fig. 17 illustrates a reserved setting screen that is displayed on the web browser according to the second exemplary embodiment and used for the multifunction peripheral 100 to perform certificate automatic acquisition/update processing. A setting for the multifunction peripheral 100 to perform the certificate automatic acquisition/update processing on the set date and time is made through the reserved setting screen.

The PC 103 accepts, from the user, the setting about the timing for the multifunction peripheral 100 for an electronic certificate acquisition request to the certificate authority, through a starting date/time 1701.

A request timing automatic adjustment setting 1702 is a field for inputting a setting for enabling the request timing automatic adjustment. In the present exemplary embodiment, when a setting 1702A for enabling the request timing automatic adjustment is checked, as described below, the acquisition request starting date and time is determined depending on the number 1702B of multifunction peripherals to which the setting is distributed.

For example, in the processing of step S1406 in the flowchart of Fig. 14, the CPU 201 determines an adjustment range depending on the number of multifunction peripherals input based on the following setting held by the setting distribution control unit 308, and calculates a time for adding an acquisition request starting date/time.

| Number of multifunction peripherals to be adjusted | Adjustment range (seconds) |
|---|---|
| 1-10 | 60 |
| 11-100 | 3600 |
| 101-500 | 43200 |
| 501-1000 | 86400 |

For example, when 50 is set as the number 1702B of multifunction peripherals to which the setting is distributed, the adjustment range is 3600 seconds, and when the random number generated in step S1405 illustrated in Fig. 14 is 5029395, 195 seconds are added to the certificate acquisition request date and time by the following calculation.

$$5029395 \bmod 60 \times 60 \text{ (seconds)} = 195 \text{ (seconds)}$$

Further, in the second exemplary embodiment, the setting distribution control unit 308 holds the setting for the adjustment range in a fixed manner depending on the number of multifunction peripherals, but instead the operator can change and set the number of multifunction peripherals to be adjusted and the adjustment range from the RUI or the control panel 212.

In this manner, the PC 103 generates change information for changing the timing for performing the electronic certificate acquisition request based on information different from the setting input through the starting date/time 1701.

The settings of the starting date/time 1701, the regular update setting 1703, and the certificate acquisition request information 1704 are the same as the settings illustrated in Figs. 10A and 10B according to the first exemplary embodiment.

The processing described above enables the setting determined based on the setting accepted through the starting date/time 1701 and the change information to the multifunction peripheral 100 via the network as the timing for an electronic certificate acquisition request to the certificate authority.

As described above, according to the second exemplary embodiment, even when the certificate automatic acquisition/update setting value is distributed to a plurality of multifunction peripherals, each multifunction peripheral automatically changes the acquisition timing depending on the number of multifunction peripherals to which the setting value is distributed. Accordingly, the acquisition request timing can be set to a plurality of information processing apparatuses in such a manner that the electronic certificate acquisition request timing varies among the plurality of information processing apparatuses. In this manner, it is possible to prevent concentration of traffic and prevent troubles, such as a delay in response from the server, or interruption of certificate authority services, due to transmission of issuance requests that cannot be processed by the server of the certificate authority. Accordingly, even when the electronic certificate acquisition timing is set to a plurality of information processing apparatuses at once, it is possible to stably add or update an electronic certificate while preventing the occurrence of congestion in the network and the occurrence of a failure in the server.

Next, a third exemplary embodiment of the present invention will be described. The third exemplary embodiment illustrates control for changing and the certificate acquisition request date and time for each device and distributing an certificate acquisition when the certificate automatic acquisition/update setting value is distributed from the PC 103. The PC 103 is a setting apparatus that sets a timing for an electronic certificate acquisition request to the certificate authority to the information processing apparatus via the network.

The network configuration, the hardware configuration of the multifunction peripheral 100, which is an information processing apparatus, and the PC 103, and the software configuration in the third exemplary embodiment are the same as those in the first exemplary embodiment, and thus descriptions thereof are omitted. Further, the distribution control application display processing, the certificate automatic acquisition/update setting value acquisition, distribution, and setting processing, the certificate issuance request/acquisition processing, and the like in the second exemplary embodiment are the same as those in the first exemplary embodiment, and thus descriptions thereof are omitted.

Fig. 18 illustrates a reserved setting screen that is displayed on the web browser and used for the multifunction peripheral 100 to perform certificate automatic acquisition/update processing. The reserved setting screen displays a setting value for the multifunction peripheral 100 to perform the certificate automatic acquisition/update processing on the set date and time. The PC 103 accepts, from the user, the setting about the timing for the multifunction peripheral 100 for an electronic certificate acquisition request to the certificate authority, through a starting date/time 1801.

In the third exemplary embodiment, the request timing automatic adjustment is performed by the PC 103. Accordingly, setting items for setting the request timing automatic adjustment illustrated in Figs. 10A and 10B and Fig. 17 are omitted. The settings of the acquisition request starting date/time 1801, a regular update setting 1802, and a certificate acquisition request information 1803 are the same as the settings illustrated in Figs. 10A and 10B according to the first exemplary embodiment illustrated in Figs. 7A to 7D and the settings illustrated in Fig. 17 according to the second exemplary embodiment.

Fig. 19 is a flowchart illustrating processing for the certificate automatic acquisition/update setting value distribution/setting request according to the third exemplary embodiment to be executed by the PC 103 in steps S606 and S608 illustrated in Fig. 6. This processing is achieved by causing the CPU 401 to execute a program for the distribution control application 505 loaded into the RAM 403.

This processing is started when the distribution button 1005 illustrated in Fig. 10A is pressed. First, in step S1901, the CPU 401 refers to the setting values illustrated in Fig. 10A to acquire connection information about the multifunction peripheral on the top of the list.

Next, in step S1902, the CPU 401 determines whether the multifunction peripheral selected in step S1901 is a multifunction peripheral to which the setting information about the request timing is distributed. In a case where the CPU 401 determines that the selected multifunction peripheral is a multifunction peripheral to which the setting information is distributed (YES in step S1902), the processing proceeds to step S1903. In a case where it is determined that the selected multifunction peripheral is not a multifunction peripheral to which the setting information is distributed (NO in step S1902), the processing proceeds to step S1912.

In a case where the selected multifunction peripheral is set as a distribution target (YES in step S1902), the processing proceeds to step S1903. In a case where the selected multifunction peripheral is not set as a distribution target (NO in step S1902), the processing proceeds to step S1912. In step S1903, the CPU 401 calculates a time to be added or changed to the certificate acquisition request date and time for the multifunction peripheral to which the setting information is distributed.

In a method for calculating the time to be added or changed in the third exemplary embodiment, the number of seconds obtained by multiplying the number of orders of distributing the setting information to the multifunction peripherals by the PC 103 by the number of seconds of the preliminarily set time interval is added. For example, assuming that the number of seconds of the preliminarily determined time intervals is three seconds,

when the setting information is distributed to the multifunction peripheral with a device name "Device B" illustrated in Fig. 10A, 3 seconds × 1 = 3 seconds are added; when the setting information is distributed to the multifunction peripheral with a device name "Device C" illustrated in Fig. 10A, 3 seconds × 2 = 6 seconds are added; and

when the setting information is distributed to the multifunction peripheral with a device name "Device D" illustrated in Fig. 10A, 3 seconds × 3 = 9 seconds are added.

In this manner, the PC 103 generates the change information for changing the timing for performing the electronic certificate acquisition request based on information different from the setting input through the starting date/time 1801. In the third exemplary embodiment, the time interval of three seconds is fixed as the number of seconds, but instead the operator can change and set the number of seconds of the time interval from the RUI or the control panel 212. Further, in the third exemplary embodiment, different seconds are added to the respective multifunction peripherals to which the setting information is distributed. In another exemplary embodiment, the multifunction peripherals to which the setting information is distributed can be divided into a predetermined number of groups and different number of seconds can be added to the respective groups. For example, as illustrated in Fig. 20, in a case where the setting information is distributed to 30 multifunction peripherals, assuming that first to tenth multifunction peripherals are grouped into a group A, eleventh to twentieth multifunction peripherals are grouped into a group B, and twenty-first to thirtieth multifunction peripherals are grouped into a group C, the additional time is added or changed in such a manner that

when the setting information is distributed to the group A of multifunction peripherals, 3 seconds × 1 = 3 seconds are added,

when the setting information is distributed to the group B of multifunction peripherals, 3 seconds × 2 = 6 seconds are added, and

when the setting information is distributed to the group C of multifunction peripherals, 3 seconds × 3 = 9 seconds are added.

In step S1904, the CPU 401 adds the number of additional seconds calculated in step S1903 to the data to be distributed to the distribution target device.

Fig. 21 illustrates an example of data on the certificate automatic acquisition/update setting value acquired from the multifunction peripheral 100 in step S605 illustrated in Fig. 6 according to the third exemplary embodiment. In step S1904, the CPU 401 adds the number of seconds calculated in step S1903 to a field 1901 in which the setting value for the acquisition request starting date/time illustrated in Fig. 19 is described.

For example, when three seconds are added, "3" is added to a setting value 1902 indicating the number of seconds of the acquisition request starting date/time. Next, in step S1905, the CPU 401 establishes a connection by the TCP/IP protocol based on information about the connection destination of the distribution target multifunction peripheral acquired in the previous step.

In step S1906, the CPU 401 determines whether the connection to the device is successful. In a case where the CPU 401 determines that the connection is successful (YES in step S1906), the processing proceeds to step S1907. In a case where the CPU 401 determines that the connection to the device is unsuccessful (NO in step S1906), the processing proceeds to step S1910.

In step S1907, the CPU 401 transmits the certificate automatic acquisition/update setting value distribution/setting request by the HTTP/SOAP protocol. In step S1908, the CPU 401 determines whether the transmission is successful. In a case where the CPU 401 determines that the transmission is successful (YES in step S1908), the processing proceeds to step S1909. In a case where the CPU 401 determines that the transmission is unsuccessful (NO in step S1908), the processing proceeds to step S1910.

In step S1909, the CPU 401 receives a response from the multifunction peripheral 100. After the reception of the response, in step S1910, the processing results based on the processing of each step are temporarily stored in the RAM 403. In step S1911, the CPU 401 refers to the setting values illustrated in Fig. 10A again and acquires connection information about the next multifunction peripheral on the list. Further, in step S1912, the CPU 401 determines whether the distribution of the setting information to all multifunction peripherals set in the list is completed. In a case where the CPU 401 determines that the distribution is not completed (NO in step S1912), the processing returns to step S1902. In a case where the CPU 401 determines that the distribution is completed (YES in step S1912), the processing proceeds to step S1913.

In step S1913, the CPU 401 displays the processing result stored in step S1810 in the distribution result 1004 illustrated in Fig. 10B, and then the processing is terminated.

The processing described above enables setting of the setting determined based on the setting accepted through the starting date/time 1801 and the change information to the multifunction peripheral 100 via the network as the timing for an electronic certificate acquisition request to the certificate authority.

Fig. 22 is a flowchart illustrating certificate automatic acquisition/update setting value distribution/setting processing to be executed by the multifunction peripheral 104 in steps S606, S607, and S608 illustrated in Fig. 6. This processing is achieved by causing the CPU 201 to execute a program for the setting distribution control unit 308 loaded into the RAM 203.

First, in step S2201, the CPU 201 waits for communication connection to the multifunction peripheral 104. If the CPU 201 has received the connection from the PC 103, the certificate automatic acquisition/update setting value acquisition request by the HTTP/SOAP protocol, the setting value data (Fig. 21), the processing proceeds to step S2202.

In step S2202, the CPU 201 analyzes the data received in step S2201, and compares the current time set to the multifunction peripheral with the certificate acquisition request date and time.

In step S2203, the CPU 201 determines whether received data can be set based on the result of comparison in step S2202. In a case where the calculated time is a time before the current time (NO in step S2203), the CPU 201 determines that a setting error has occurred, and then the processing proceeds to step S2206. In a case where the CPU 201 determines that the time is settable in step S2203 (YES in step S2203), the processing proceeds to step S2204.

In step S2204, the CPU 201 stores the certificate acquisition request date and time, and the processing proceeds to step S2205 to start the timer processing for transmitting the certificate acquisition request at the designated time. In step S2206, the CPU 201 transmits a response according to the processing result of each step to the PC 103.

Fig. 23 is a flowchart illustrating processing of next certificate update date and time determination/setting processing according to the third exemplary embodiment to be executed by the multifunction peripheral 104 in step S1525 illustrated in Fig. 15. This processing is achieved by causing the CPU 201 to execute a program for the setting distribution control unit 308 loaded into the RAM 203.

First, in step S2301, the CPU 201 acquires the settings of the starting date/time 719 and the update interval 721(b) which are currently set as illustrated in Fig. 7C, and then the processing proceeds to step S2302. In step S2302, the CPU 201 calculates the next certificate starting date/time 719 by adding the number of months of the update interval 721(b) to the starting date/time 719 acquired in step S2301. In step S2303, the CPU 201 stores the calculated certificate acquisition request date and time. After that, the processing proceeds to step S2304 to start the timer processing for transmitting the certificate acquisition request at the designated time, and then the processing is terminated.

As described above, according to the third exemplary embodiment, the acquisition request timing can be set to each information processing apparatus in such a manner that the electronic certificate acquisition request timing varies among a plurality of information processing apparatuses groups. Accordingly, even when the certificate automatic acquisition/update setting value is distributed to a plurality of multifunction peripherals, the PC that distributes the setting information automatically changes the acquisition timing. Accordingly, it is possible to prevent concentration of traffic and prevent troubles, such as a delay in response from the server, or interruption of certificate authority services, due to transmission of issuance requests that cannot be processed by the server of the certificate authority. In this manner, even when the electronic certificate acquisition timing is set to a plurality of information processing apparatuses at once, it is possible to stably add or update an electronic certificate while preventing the occurrence of congestion in the network and the occurrence of a failure in the server.

## Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The invention is defined by the appended claims.

An electronic certificate acquisition timing set in an information processing apparatus is changed based on predetermined change information, and the acquisition of the electronic certificate is executed at the changed timing.

## Claims

**1.** An information processing apparatus (100) comprising:

first setting means for setting a date and time of acquisition of an electronic certificate from a certificate authority;
generation means for generating change information for changing the date and time of acquisition set by the first setting means, the change information being random information generated based on information unique to the information processing apparatus;
changing means for changing the date and time set by the first setting means based on the change information;
second setting means for setting the date and time changed by the changing means;
requesting means for performing an acquisition request for the electronic certificate to the certificate authority on the date and time set by the second setting means; and
acquisition means for acquiring the electronic certificate as a response to the acquisition request.

**2.** The information processing apparatus (100) according to claim 1,
wherein the change information includes random number information, and
wherein the generation means generates the random number information based on information unique to the information processing apparatus (100).

**3.** The information processing apparatus (100) according to claim 2, wherein the information unique to the information processing apparatus (100) is one of a media access control (MAC) address, an Internet Protocol (IP) address, and a serial number set in the information processing apparatus (100).

**4.** The information processing apparatus (100) according to claim 1, wherein the change information includes random number information and range information indicating a time width in which the date and time of acquisition of the electronic certificate from the certificate authority is changed.

**5.** The information processing apparatus according to claim 1,
wherein the change information includes range information indicating a time width in which the date and time of acquisition of the electronic certificate from the certificate authority is changed,
wherein the first setting means sets the date and time based on the range information from a setting apparatus (103), and
wherein the range information is determined based on the number of information processing apparatuses (100) connected to the setting apparatus (103).

**6.** The information processing apparatus (100) according to claim 1, further comprising:

key generation means for generating a key pair that is used for encryption of communication data;
request generation means for generating a signature request of the electronic certificate, based on the key pair generated by the key generation means; and
third setting means for setting a use for the electronic certificate,
wherein the requesting means performs the signature request of the electronic certificate at a date and time determined based on the setting set by the second setting means,
wherein the acquisition means acquires the electronic certificate with an electronic signature as a response to the signature request, and
wherein the third setting means sets a use for the electronic certificate acquired by the acquisition means.

**7.** The information processing apparatus (100) according to claim 1, further comprising display control means for displaying, on display means, a date and time determined based on the setting set by the second setting means.

**8.** The information processing apparatus (100) according to claim 1, wherein the information processing apparatus (100) is an image forming apparatus for executing print processing.

**9.** A setting apparatus (103) that sets, to an information processing apparatus (100) via a network (110), a timing for performing an acquisition request for an electronic certificate to a certificate authority (102), the setting apparatus (103) comprising:

first setting means for setting a date and time of acquisition of the electronic certificate from the certificate authority, to the information processing apparatus (100);
generation means for generating change information for changing the date and time of acquisition set by the first setting means, the change information being random information generated based on information unique to the information processing apparatus;
changing means for changing the date and time set by the first setting means based on the change information; and
second setting means for setting the date and time changed by the changing means.

**10.** The setting apparatus (103) according to claim 9, wherein the second setting means sets the date and time to a plurality of information processing apparatuses (100) in such a manner that the date and time for performing the acquisition request varies among the plurality of information processing apparatuses (100).

**11.** The setting apparatus (103) according to claim 9, wherein the setting apparatus (103) sets the timing to each information processing apparatus (100) in such a manner that the timing for performing the acquisition request varies among a plurality of information processing apparatus (100) groups.

**12.** A control method for an information processing apparatus (100), the method comprising:

setting, in a first setting step, a date and time of acquisition of an electronic certificate from a certificate authority;
generating change information for changing the date and time of acquisition set in the first setting step, the change information being random information generated based on information unique to the information processing apparatus;
changing the date and time set in the first setting step based on the change information;
setting, in a second setting step, the date and time changed in the changing step;
performing an acquisition request for the electronic certificate to the certificate authority on the date and time set in the second setting step; and
acquiring the electronic certificate as a response to the acquisition request.

**13.** A control method for a setting apparatus (103) that sets, to an information processing apparatus (100) via a network (110), a timing for performing an acquisition request for an electronic certificate to a certificate authority (102), the control method comprising:

setting, in a first setting step, the date and time of acquisition of the electronic certificate from the certificate authority to the information processing apparatus (100);
generating change information for changing the date and time of acquisition set in the first setting step, the change information being random information generated based on information unique to the information processing apparatus
changing the date and time set in the first setting step based on the change information; and
setting, in a second setting step, the date and time changed in the changing step.

**14.** A program for causing a computer that is for an information processing apparatus to execute:

setting, in a first setting step, a date and time of acquisition of an electronic certificate from a certificate authority;
generating change information for changing the date and time of acquisition set in the first setting step, the change information being random information generated based on information unique to the information processing apparatus;
changing the date and time set in the first setting step based on the change information;
setting, in a second setting step, the date and time changed in the changing step;
performing an acquisition request for the electronic certificate to the certificate authority on the date and time set in the second setting step; and
acquiring the electronic certificate as a response to the acquisition request.

**15.** A program for causing a computer that is for setting, to an information processing apparatus (100) via a network (110), a timing for performing an acquisition request for an electronic certificate to a certificate authority (102), to execute:

setting, in a first setting step, a date and time of acquisition of the electronic certificate from the certificate authority to the information processing apparatus (100);
generating change information for changing the date and time of acquisition set in the first setting step, the change information being random information generated based on information unique to the information processing apparatus;
changing the date and time set in the first setting step based on the change information; and
setting, in a second setting step, the date and time changed in the changing step.

## Patentansprüche

1. Informationsverarbeitungsgerät (100), mit:

   einer ersten Einstellungseinrichtung zur Einstellung eines Datums und einer Uhrzeit eines Erlangens eines elektronischen Zertifikats von einer Zertifizierungsstelle;
   einer Erzeugungseinrichtung zur Erzeugung einer Änderungsinformation zum Ändern des durch die erste Einstellungseinrichtung eingestellten Datums und der Uhrzeit des Erlangens, wobei die Änderungsinformation eine Zufallsinformation ist, die auf der Grundlage von einer für das Informationsverarbeitungsgerät einmaligen Information erzeugt wird;
   einer Änderungseinrichtung zur Änderung des durch die erste Einstellungseinrichtung eingestellten Datums und der Uhrzeit auf der Grundlage der Änderungsinformation;
   einer zweiten Einstellungseinrichtung zur Einstellung des Datums und der Uhrzeit, die durch die Änderungseinrichtung geändert wurden;
   einer Anfrageeinrichtung zur Ausführung einer Erlangungsanfrage für das elektronische Zertifikat an die Zertifizierungsstelle an dem durch die zweite Einstellungseinrichtung eingestellten Datum und der Uhrzeit; und
   einer Erlangungseinrichtung zur Erlangung des elektronischen Zertifikats als eine Antwort auf die Erlangungsanfrage.

2. Informationsverarbeitungsgerät (100) nach Anspruch 1,
   wobei die Änderungsinformation eine Zufallszahlinformation umfasst, und
   wobei die Erzeugungseinrichtung die Zufallszahlinformation auf der Grundlage von einer für das Informationsverarbeitungsgerät (100) einmaligen Information erzeugt.

3. Informationsverarbeitungsgerät (100) nach Anspruch 2, wobei die für das Informationsverarbeitungsgerät (100) einmalige Information eines von einer Media Access Control (MAC)-Adresse, einer Internet Protocol (IP)-Adresse oder einer in dem Informationsverarbeitungsgerät (100) eingestellten Seriennummer ist.

4. Informationsverarbeitungsgerät (100) nach Anspruch 1, wobei die Änderungsinformation eine Zufallszahlinformation und eine Bereichsinformation umfasst, die eine Zeitspanne angibt, in der das Datum und die Uhrzeit des Erlangens des elektronischen Zertifikats von der Zertifizierungsstelle geändert werden.

5. Informationsverarbeitungsgerät nach Anspruch 1,
   wobei die Änderungsinformation eine Bereichsinformation umfasst, die eine Zeitspanne angibt, in der das Datum und die Uhrzeit des Erlangens des elektronischen Zertifikats von der Zertifizierungsstelle geändert werden,
   wobei die erste Einstellungseinrichtung das Datum und die Uhrzeit auf der Grundlage der Bereichsinformation von einem Einstellungsgerät (103) einstellt, und
   wobei die Bereichsinformation auf der Grundlage der Anzahl von mit dem Einstellungsgerät (103) verbundenen Informationsverarbeitungsgeräten (100) bestimmt ist.

6. Informationsverarbeitungsgerät (100) nach Anspruch 1, ferner mit:

   einer Schlüsselerzeugungseinrichtung zur Erzeugung eines Schlüsselpaares, das zur Verschlüsselung von Kommunikationsdaten verwendet wird;
   einer Anfrageerzeugungseinrichtung zur Erzeugung einer Signaturanfrage des elektronischen Zertifikats auf der Grundlage des von der Schlüsselerzeugungseinrichtung erzeugten Schlüsselpaares; und
   einer dritten Einstellungseinrichtung zur Einstellung einer Verwendung für das elektronische Zertifikat,
   wobei die Anfrageeinrichtung die Signaturanfrage des elektronischen Zertifikats zu einem Datum und einer Uhrzeit auf der Grundlage der durch die zweite Einstellungseinrichtung eingestellten Einstellung ausführt,

wobei die Erlangungseinrichtung das elektronische Zertifikat mit einer elektronischen Signatur als eine Antwort auf die Signaturanfrage erlangt, und
wobei die dritte Einstellungseinrichtung eine Verwendung für das durch die Erlangungseinrichtung erlangte elektronische Zertifikat einstellt.

**7.** Informationsverarbeitungsgerät (100) nach Anspruch 1, ferner mit einer Anzeigesteuerungseinrichtung zur Anzeige eines Datums und einer Uhrzeit, die auf der Grundlage der durch die zweite Einstellungseinrichtung eingestellten Einstellung bestimmt werden, auf einer Anzeigeeinrichtung.

**8.** Informationsverarbeitungsgerät (100) nach Anspruch 1, wobei das Informationsverarbeitungsgerät (100) ein Bilderstellungsgerät zur Ausführung einer Druckverarbeitung ist.

**9.** Einstellungsgerät (103), das für ein Informationsverarbeitungsgerät (100) über ein Netzwerk (110) ein Timing zur Ausführung einer Erlangungsanfrage für ein elektronisches Zertifikat an eine Zertifizierungsstelle (102) einstellt, wobei das Einstellungsgerät (103) umfasst:

eine erste Einstellungseinrichtung zur Einstellung eines Datums und einer Uhrzeit eines Erlangens des elektronischen Zertifikats von der Zertifizierungsstelle, für das Informationsverarbeitungsgerät (100);
eine Erzeugungseinrichtung zur Erzeugung einer Änderungsinformation zur Änderung des durch die erste Einstellungseinrichtung eingestellten Datums und der Uhrzeit des Erlangens, wobei die Änderungsinformation eine Zufallsinformation ist, die auf der Grundlage von einer für das Informationsverarbeitungsgerät einmaligen Information erzeugt wird;
eine Änderungseinrichtung zur Änderung des durch die erste Einstellungseinrichtung eingestellten Datums und der Uhrzeit auf der Grundlage der Änderungsinformation; und
eine zweite Einstellungseinrichtung zur Einstellung des Datums und der Uhrzeit, die durch die Änderungseinrichtung geändert wurden.

**10.** Einstellungsgerät (103) nach Anspruch 9, wobei die zweite Einstellungseinrichtung das Datum und die Uhrzeit für eine Vielzahl von Informationsverarbeitungsgeräten (100) in einer solchen Art und Weise einstellt, dass das Datum und die Uhrzeit zur Ausführung der Erlangungsanfrage zwischen der Vielzahl von Informationsverarbeitungsgeräten (100) variieren.

**11.** Einstellungsgerät (103) nach Anspruch 9, wobei das Einstellungsgerät (103) das Timing für jedes Informationsverarbeitungsgerät (100) in einer solchen Art und Weise einstellt, dass das Timing zur Ausführung der Erlangungsanfrage zwischen einer Vielzahl von Gruppen von Informationsverarbeitungsgeräten (100) variiert.

**12.** Steuerungsverfahren für ein Informationsverarbeitungsgerät (100), wobei das Verfahren umfasst:

Einstellen, in einem ersten Einstellungsschritt, eines Datums und einer Uhrzeit eines Erlangens eines elektronischen Zertifikats von einer Zertifizierungsstelle;
Erzeugen einer Änderungsinformation zum Ändern des in dem ersten Einstellungsschritt eingestellten Datums und der Uhrzeit des Erlangens, wobei die Änderungsinformation eine Zufallsinformation ist, die auf der Grundlage von einer für das Informationsverarbeitungsgerät einmaligen Information erzeugt wird;
Ändern des in dem ersten Einstellungsschritt eingestellten Datums und der Uhrzeit auf der Grundlage der Änderungsinformation;
Einstellen, in einem zweiten Einstellungsschritt, des Datums und der Uhrzeit, die in dem Änderungsschritt geändert wurden;
Ausführen einer Erlangungsanfrage für das elektronische Zertifikat an die Zertifizierungsstelle an dem in dem zweiten Einstellungsschritt eingestellten Datum und der Uhrzeit; und
Erlangen des elektronischen Zertifikats als eine Antwort auf die Erlangungsanfrage.

**13.** Steuerungsverfahren für ein Einstellungsgerät (103), das für ein Informationsverarbeitungsgerät (100) über ein Netzwerk (110) ein Timing zur Ausführung einer Erlangungsanfrage für ein elektronisches Zertifikat an eine Zertifizierungsstelle (102) einstellt, wobei das Steuerungsverfahren umfasst:

Einstellen, in einem ersten Einstellungsschritt, des Datums und der Uhrzeit des Erlangens des elektronischen Zertifikats von der Zertifizierungsstelle für das Informationsverarbeitungsgerät (100);
Erzeugen einer Änderungsinformation zum Ändern des in dem ersten Einstellungsschritt eingestellten Datums und der Uhrzeit des Erlangens, wobei die Änderungsinformation eine Zufallsinformation ist, die auf der Grundlage von einer für das Informationsverarbeitungsgerät einmaligen Information erzeugt wird;
Ändern des in dem ersten Einstellungsschritt eingestellten Datums und der Uhrzeit auf der Grundlage der Änderungsinformation; und
Einstellen, in einem zweiten Einstellungsschritt, des Datums und der Uhrzeit, die in dem Änderungsschritt geändert wurden.

**14.** Programm zum Veranlassen eines Computers, der für ein Informationsverarbeitungsgerät bestimmt ist, folgendes auszuführen:

Einstellen, in einem ersten Einstellungsschritt, eines Datums und einer Uhrzeit eines Erlangens eines elektronischen Zertifikats von einer Zertifizierungsstelle;
Erzeugen einer Änderungsinformation zum Ändern des in dem ersten Einstellungsschritt eingestellten Datums und der Uhrzeit des Erlangens, wobei die Änderungsinformation eine Zufallsinformation ist, die auf der Grundlage von einer für das Informationsverarbeitungsgerät einmaligen Information erzeugt wird;
Ändern des in dem ersten Einstellungsschritt eingestellten Datums und der Uhrzeit auf der Grundlage der Änderungsinformation;
Einstellen, in einem zweiten Einstellungsschritt, des Datums und der Uhrzeit, die in dem Änderungsschritt geändert wurden;
Ausführen einer Erlangungsanfrage für das elektronische Zertifikat an die Zertifizierungsstelle an dem in dem zweiten Einstellungsschritt eingestellten Datum und der Uhrzeit; und
Erlangen des elektronischen Zertifikats als eine Antwort auf die Erlangungsanfrage.

**15.** Programm zum Veranlassen eines Computers, der dazu bestimmt ist, über ein Netzwerk (110) an ein Informationsverarbeitungsgerät (100) ein Timing für eine Ausführung einer Erlangungsanfrage für ein elektronisches Zertifikat an eine Zertifizierungsstelle (102) einzustellen, folgendes auszuführen:

Einstellen, in einem ersten Einstellungsschritt, eines Datums und einer Uhrzeit eines Erlangens des elektronischen Zertifikats von der Zertifizierungsstelle für das Informationsverarbeitungsgerät (100);
Erzeugen einer Änderungsinformation zum Ändern des in dem ersten Einstellungsschritt eingestellten Datums und der Uhrzeit des Erlangens, wobei die Änderungsinformation eine Zufallsinformation ist, die auf der Grundlage von einer für das Informationsverarbeitungsgerät einmaligen Information erzeugt wird;
Ändern des in dem ersten Einstellungsschritt eingestellten Datums und der Uhrzeit auf der Grundlage der Änderungsinformation; und
Einstellen, in einem zweiten Einstellungsschritt, des Datums und der Uhrzeit, die in dem Änderungsschritt geändert wurden.

## Revendications

**1.** Appareil de traitement d'informations (100), comprenant :

un premier moyen de définition destiné à définir une date et une heure d'acquisition d'un certificat électronique à partir d'une autorité de certification ;
un moyen de génération destiné à générer des informations de modification permettant de modifier la date et l'heure d'acquisition définies par le premier moyen de définition, les informations de modification étant des informations aléatoires générées sur la base d'informations propres à l'appareil de traitement d'informations ;
un moyen de modification destiné à modifier la date et l'heure définies par le premier moyen de définition sur la base des informations de modification ;
un deuxième moyen de définition destiné à définir la date et l'heure modifiées par le moyen de définition ;
un moyen de demande destiné à exécuter une demande d'acquisition du certificat électronique auprès de l'autorité de certification à la date et à l'heure définies par le deuxième moyen de définition ; et
un moyen d'acquisition destiné à acquérir le certificat électronique en tant que réponse à la demande d'acquisition.

**2.** Appareil de traitement d'informations (100) selon la revendication 1,
dans lequel les informations de modification comprennent des informations de nombre aléatoire, et
dans lequel le moyen de génération génère les informations de nombre aléatoire sur la base d'informations propres à l'appareil de traitement d'informations (100).

**3.** Appareil de traitement d'informations (100) selon la revendication 2, dans lequel les informations propres à l'appareil de traitement d'informations (100) correspondent à l'une d'une adresse de contrôle d'accès au support (MAC), d'une adresse de protocole Internet (IP), et d'un numéro de série défini dans l'appareil de traitement d'informations (100) .

**4.** Appareil de traitement d'informations (100) selon la revendication 1, dans lequel les informations de modification comprennent des informations de nombre aléatoire et des informations de plage indiquant une étendue temporelle sur laquelle ont été modifiées la date et l'heure d'acquisition du certificat électronique à partir de l'autorité de certification.

**5.** Appareil de traitement d'informations selon la revendication 1,
dans lequel les informations de modification comprennent des informations de plage indiquant une étendue temporelle sur laquelle ont été modifiées la date et l'heure d'acquisition du certificat électronique à partir de l'autorité de certification,
dans lequel le premier moyen de définition définit la date et l'heure sur la base des informations de plage provenant d'un appareil de définition (103), et
dans lequel les informations de plage sont déterminées sur la base du nombre d'appareils de traitement d'informations (100) connectés à l'appareil de définition (103) .

**6.** Appareil de traitement d'informations (100) selon la revendication 1, comprenant en outre :

un moyen de génération de clés destiné à générer une paire de clés destinée à un chiffrement de données de communication ;
un moyen de génération de demande destiné à générer une demande de signature du certificat électronique, sur la base de la paire de clés générée par le moyen de génération de clés ; et
un troisième moyen de définition destiné à définir une utilisation du certificat électronique,
dans lequel le moyen de demande exécute la demande de signature du certificat électronique à la date et à l'heure déterminées sur la base de la définition effectuée par le deuxième moyen de définition,
dans lequel le moyen d'acquisition acquiert le certificat électronique avec une signature électronique en tant que réponse à la demande de signature, et
dans lequel le troisième moyen de définition définit une utilisation du certificat électronique acquis par le moyen d'acquisition.

**7.** Appareil de traitement d'informations (100) selon la revendication 1, comprenant en outre un moyen de commande d'affichage destiné à afficher, sur un moyen d'affichage, une date et une heure déterminées sur la base de la définition effectuée par le deuxième moyen de définition.

**8.** Appareil de traitement d'informations (100) selon la revendication 1, l'appareil de traitement d'informations (100) étant un appareil de formation d'image destiné à exécuter un traitement d'impression.

**9.** Appareil de définition (103) qui définit, pour un appareil de traitement d'informations (100), par le biais d'un réseau (110), une temporisation d'exécution d'une demande d'acquisition d'un certificat électronique auprès d'une autorité de certification (102), l'appareil de définition (103) comprenant :

un premier moyen de définition destiné à définir une date et une heure d'acquisition du certificat électronique à partir de l'autorité de certification, pour l'appareil de traitement d'informations (100) ;
un moyen de génération destiné à générer des informations de modification permettant de modifier la date et l'heure d'acquisition définies par le premier moyen de définition, les informations de modification étant des informations aléatoires générées sur la base d'informations propres à l'appareil de traitement d'informations ;
un moyen de modification destiné à modifier la date et l'heure définies par le premier moyen de définition sur la base des informations de modification ; et
un deuxième moyen de définition destiné à définir la date et l'heure modifiées par le moyen de modification.

**10.** Appareil de définition (103) selon la revendication 9, dans lequel le deuxième moyen de définition définit la date et l'heure pour une pluralité d'appareils de traitement d'informations (100) de sorte que la date et l'heure d'exécution de la demande d'acquisition varient parmi la pluralité d'appareils de traitement d'informations (100).

**11.** Appareil de définition (103) selon la revendication 9, l'appareil de définition (103) définissant la temporisation pour chaque appareil de traitement d'informations (100) de façon telle que la temporisation d'exécution de la demande d'acquisition varie parmi une pluralité de groupes d'appareils de traitement d'informations (100).

**12.** Procédé de commande d'un appareil de traitement d'informations (100), le procédé comprenant les étapes consistant à :

définir, à une première étape de définition, une date et une heure d'acquisition d'un certificat électronique à partir d'une autorité de certification ;
générer des informations de modification permettant de modifier la date et l'heure d'acquisition définies à la première étape de définition, les informations de modification étant des informations aléatoires générées sur la base d'informations propres à l'appareil de traitement d'informations ;
modifier la date et l'heure définies à la première étape de définition sur la base des informations de modification ;
définir, à une seconde étape de définition, la date et l'heure modifiées à l'étape de modification ;
exécuter une demande d'acquisition du certificat électronique auprès de l'autorité de certification à la date et à l'heure définies à la seconde étape de définition ; et
acquérir le certificat électronique en tant que réponse à la demande d'acquisition.

**13.** Procédé de commande d'un appareil de définition (103) qui définit, pour un appareil de traitement d'informations (100), par le biais d'un réseau (110), une temporisation d'exécution d'une demande d'acquisition d'un certificat électronique auprès d'une autorité de certification (102), le procédé de commande comprenant les étapes consistant à :

définir, à une première étape de définition, la date et l'heure d'acquisition du certificat électronique à partir de l'autorité de certification pour l'appareil de traitement d'informations (100) ;
générer des informations de modification permettant de modifier la date et l'heure d'acquisition définies à la première étape de définition, les informations de modification étant des informations aléatoires générées sur la base d'informations propres à l'appareil de traitement d'informations ;
modifier la date et l'heure définies à la première étape de définition sur la base des informations modification ; et
définir, à une seconde étape de définition, la date et l'heure modifiées à l'étape de modification.

**14.** Programme destiné à amener un ordinateur d'un appareil de traitement d'informations à exécuter les étapes consistant à :

définir, à une première étape de définition, une date et une heure d'acquisition d'un certificat électronique à partir d'une autorité de certification ;
générer des informations de modification permettant de modifier la date et l'heure d'acquisition définies à la première étape de définition, les informations de modification étant des informations aléatoires générées sur la base d'informations propres à l'appareil de traitement d'informations ;
modifier la date et l'heure définies à la première étape de définition sur la base des informations de modification ;
définir, à une seconde étape de définition, la date et l'heure modifiées à l'étape de modification ;
exécuter une demande d'acquisition du certificat électronique auprès de l'autorité de certification à la date et à l'heure définies à la seconde étape de définition ; et
acquérir le certificat électronique en tant que réponse à la demande d'acquisition.

**15.** Programme destiné à amener un ordinateur destiné à définir, pour un appareil de traitement d'informations (100), par le biais d'un réseau (110), une temporisation d'exécution d'une demande d'acquisition d'un certificat électronique auprès d'une autorité de certification (102), à exécuter les étapes consistant à :

définir, à une première étape de définition, une date et une heure d'acquisition d'un certificat électronique à partir d'une autorité de certification pour l'appareil de traitement d'informations (100) ;
générer des informations de modification permettant de modifier la date et l'heure d'acquisition définies à la première étape de définition, les informations de modification étant des informations aléatoires générées sur la base d'informations propres à l'appareil de traitement d'informations ;
modifier la date et l'heure définies à la première étape de définition sur la base des informations de modification ; et
définir, à une seconde étape de définition, la date et l'heure modifiées à l'étape de modification.

FIG.1

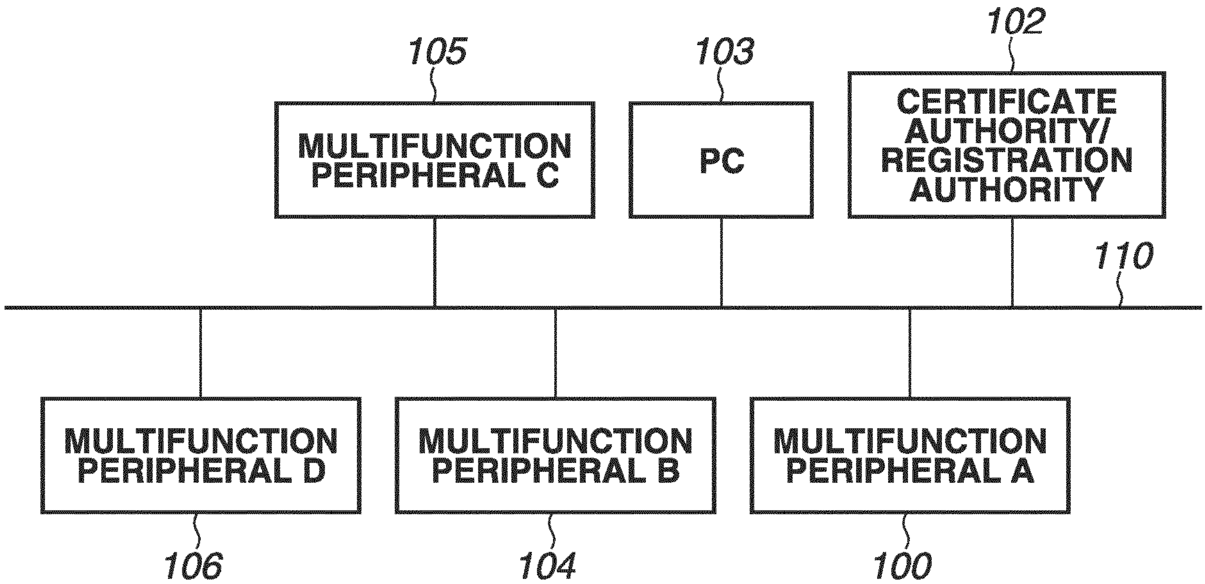
105
MULTIFUNCTION PERIPHERAL C
103
PC
102
CERTIFICATE AUTHORITY/ REGISTRATION AUTHORITY
110
MULTIFUNCTION PERIPHERAL D
106
MULTIFUNCTION PERIPHERAL B
104
MULTIFUNCTION PERIPHERAL A
100

FIG.2

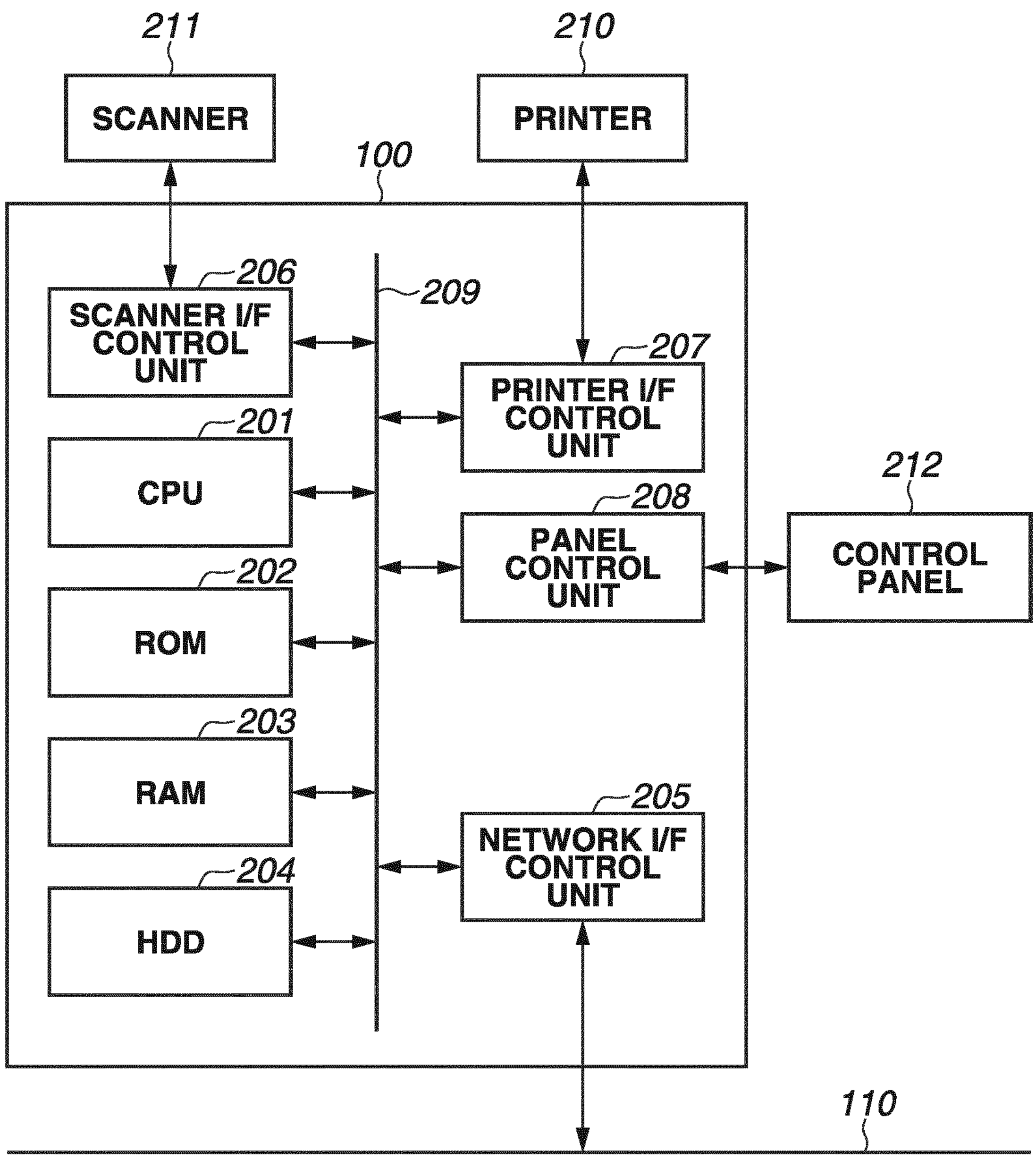
211
SCANNER
210
PRINTER
100
206
SCANNER I/F CONTROL UNIT
209
207
PRINTER I/F CONTROL UNIT
201
CPU
208
PANEL CONTROL UNIT
212
CONTROL PANEL
202
ROM
203
RAM
205
NETWORK I/F CONTROL UNIT
204
HDD
110

FIG.3

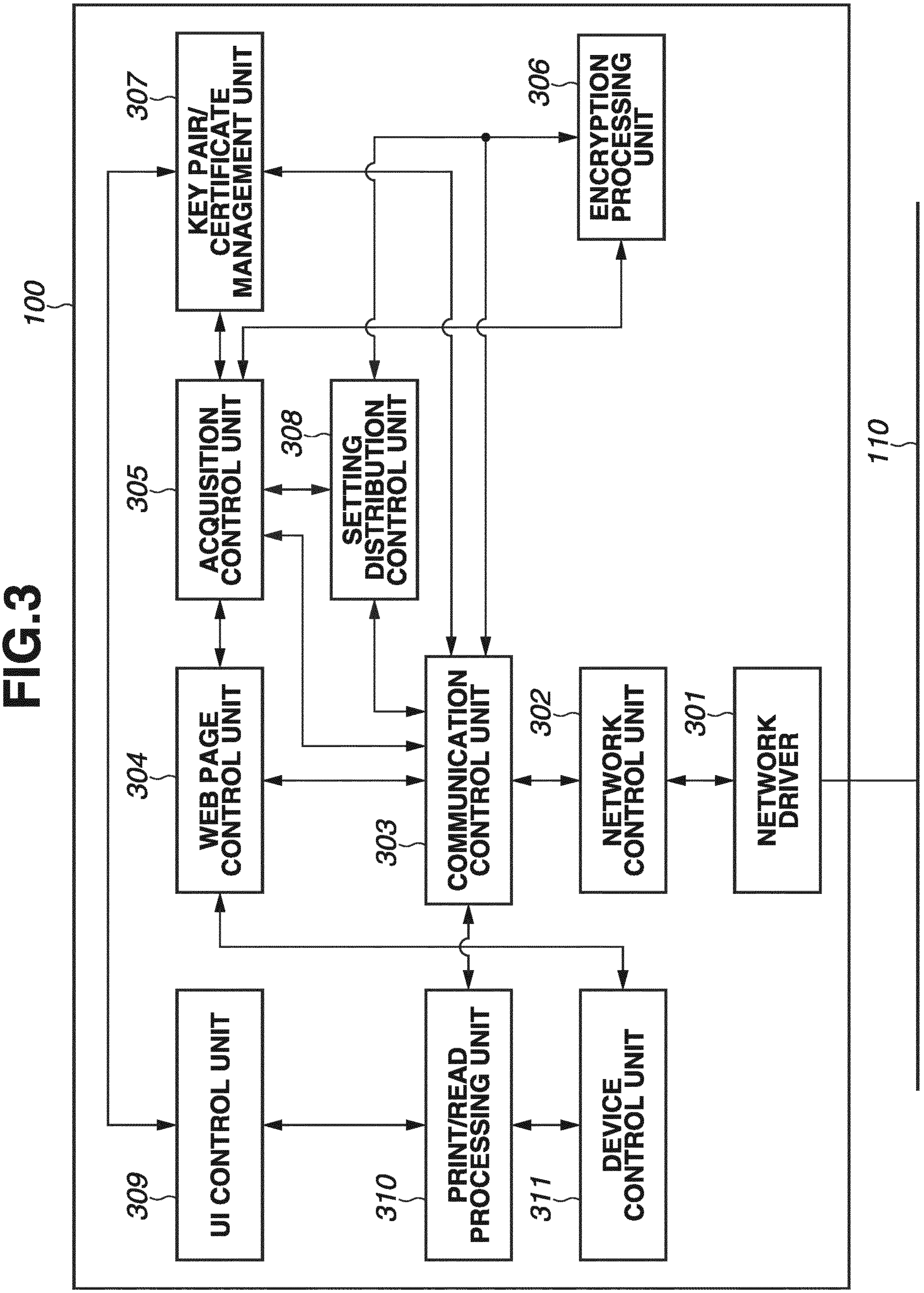
100
307
KEY PAIR/ CERTIFICATE MANAGEMENT UNIT
306
ENCRYPTION PROCESSING UNIT
305
ACQUISITION CONTROL UNIT
308
SETTING DISTRIBUTION CONTROL UNIT
304
WEB PAGE CONTROL UNIT
303
COMMUNICATION CONTROL UNIT
302
NETWORK CONTROL UNIT
301
NETWORK DRIVER
309
UI CONTROL UNIT
310
PRINT/READ PROCESSING UNIT
311
DEVICE CONTROL UNIT
110

FIG.4

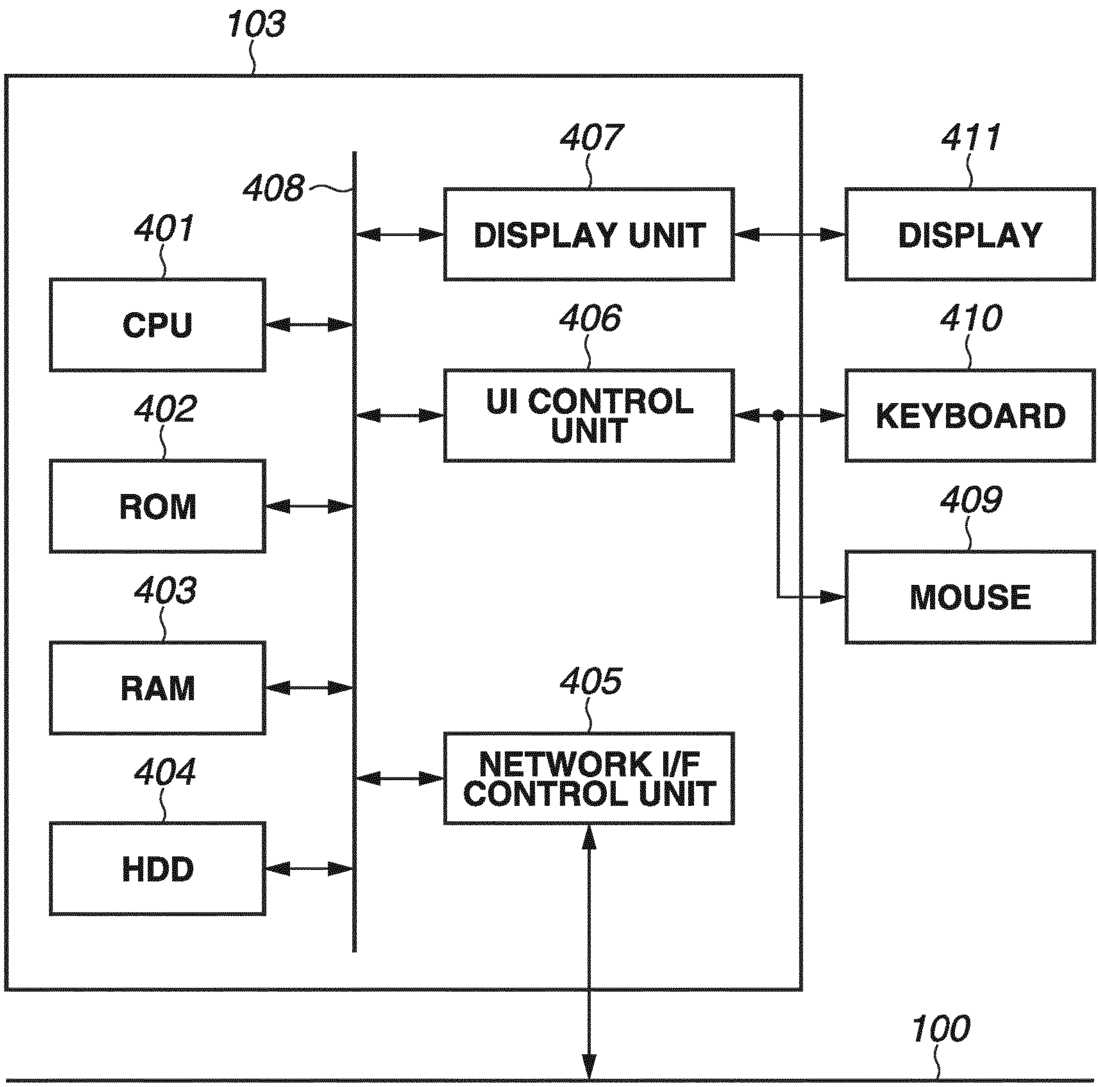
103
408
401
CPU
402
ROM
403
RAM
404
HDD
407
DISPLAY UNIT
406
UI CONTROL UNIT
405
NETWORK I/F CONTROL UNIT
411
DISPLAY
410
KEYBOARD
409
MOUSE
100

FIG.5

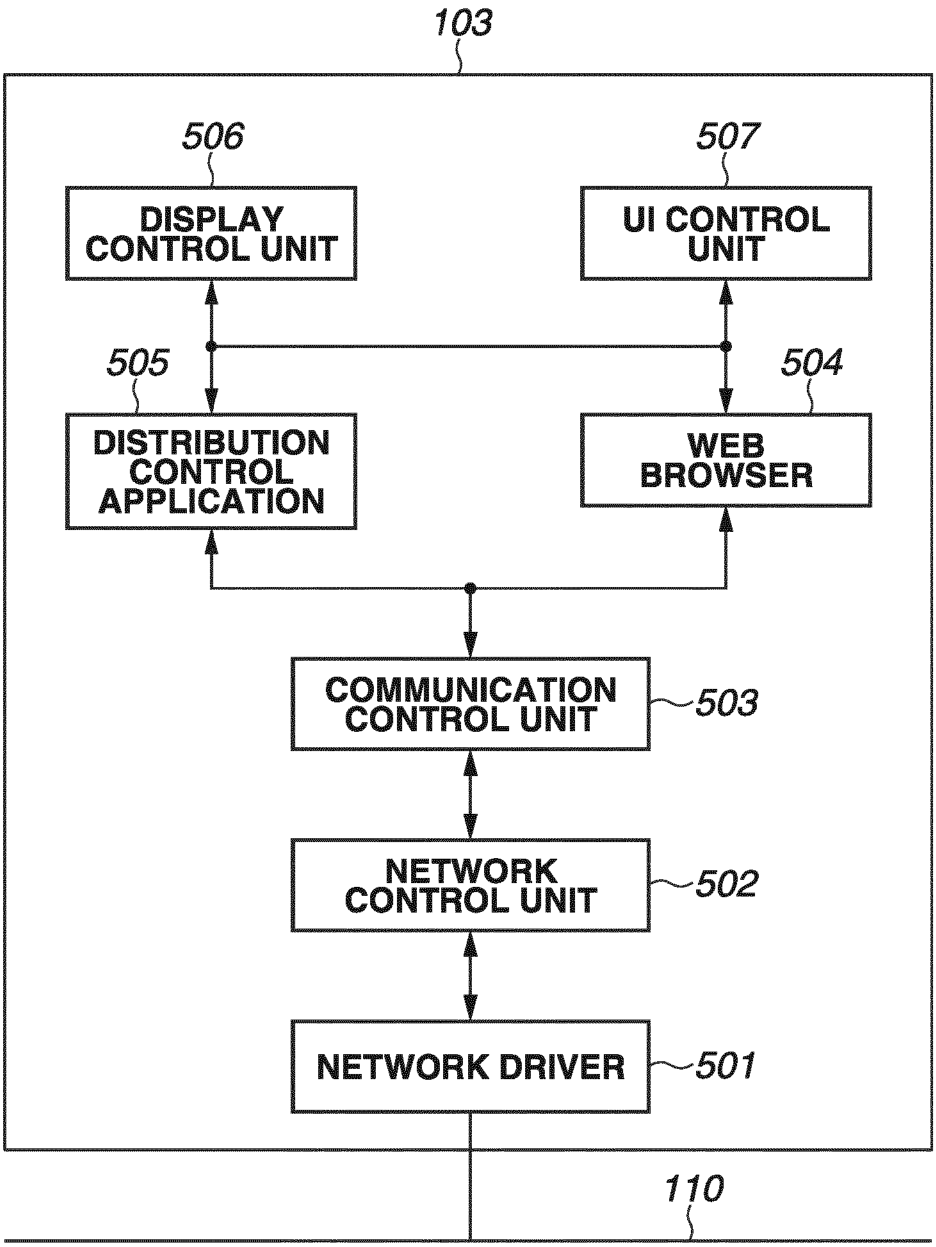
103
506
DISPLAY CONTROL UNIT
507
UI CONTROL UNIT
505
DISTRIBUTION CONTROL APPLICATION
504
WEB BROWSER
COMMUNICATION CONTROL UNIT
503
NETWORK CONTROL UNIT
502
NETWORK DRIVER
501
110

FIG.6

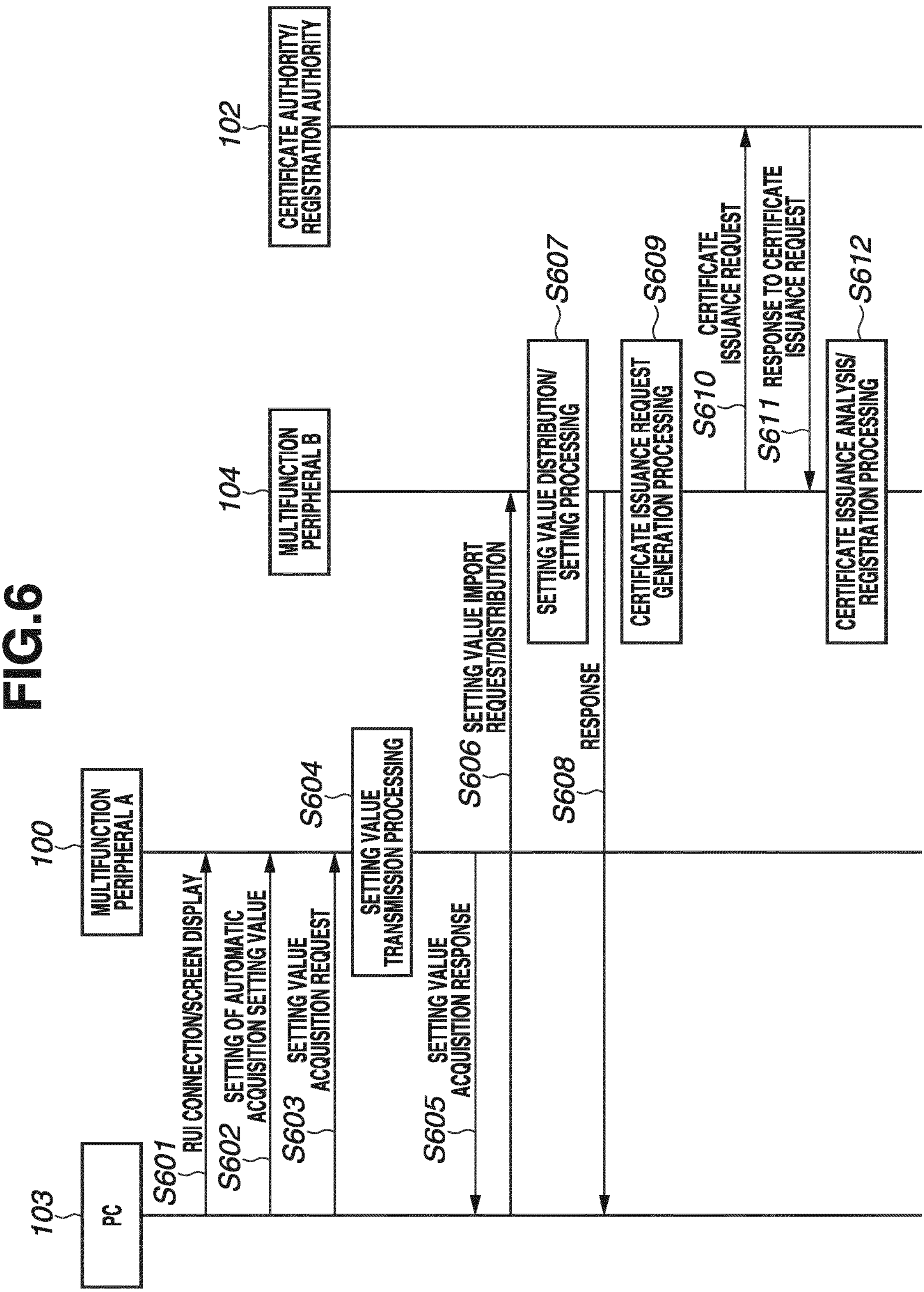
103
PC
100
MULTIFUNCTION PERIPHERAL A
104
MULTIFUNCTION PERIPHERAL B
102
CERTIFICATE AUTHORITY/ REGISTRATION AUTHORITY
S601 RUI CONNECTION/SCREEN DISPLAY
S602 SETTING OF AUTOMATIC ACQUISITION SETTING VALUE
S603 SETTING VALUE ACQUISITION REQUEST
S604
SETTING VALUE TRANSMISSION PROCESSING
S605 SETTING VALUE ACQUISITION RESPONSE
S606 SETTING VALUE IMPORT REQUEST/DISTRIBUTION
S607
SETTING VALUE DISTRIBUTION/ SETTING PROCESSING
S608 RESPONSE
S609
CERTIFICATE ISSUANCE REQUEST GENERATION PROCESSING
S610 CERTIFICATE ISSUANCE REQUEST
S611 RESPONSE TO CERTIFICATE ISSUANCE REQUEST
S612
CERTIFICATE ISSUANCE ANALYSIS/ REGISTRATION PROCESSING

FIG.7A

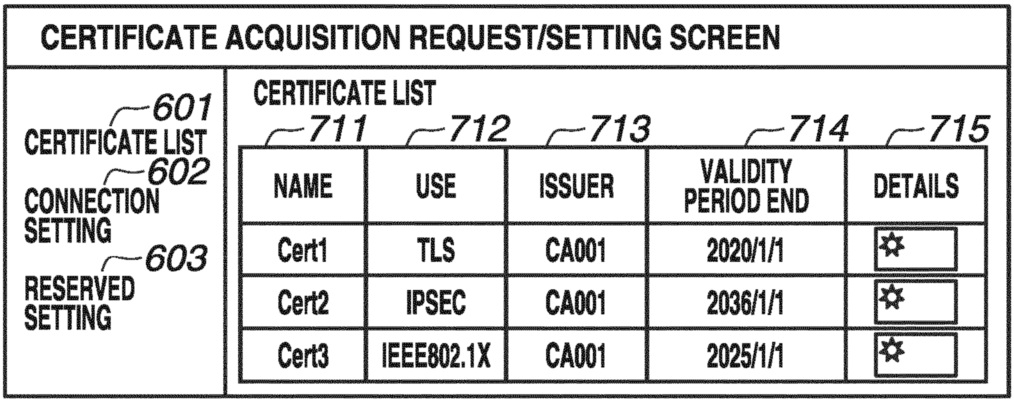
CERTIFICATE ACQUISITION REQUEST/SETTING SCREEN
601
CERTIFICATE LIST
602
CONNECTION SETTING
603
RESERVED SETTING
CERTIFICATE LIST
711
712
713
714
715
NAME
USE
ISSUER
VALIDITY PERIOD END
DETAILS
Cert1
TLS
CA001
2020/1/1
Cert2
IPSEC
CA001
2036/1/1
Cert3
IEEE802.1X
CA001
2025/1/1

FIG.7B

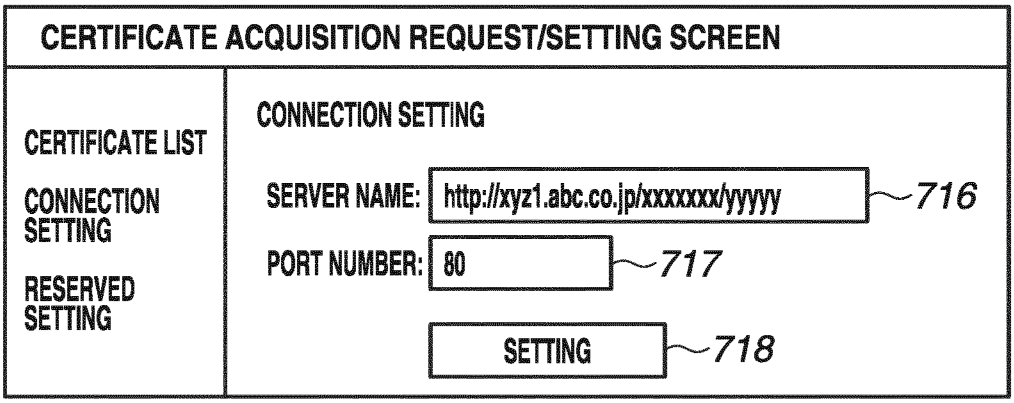
CERTIFICATE ACQUISITION REQUEST/SETTING SCREEN
CERTIFICATE LIST
CONNECTION SETTING
RESERVED SETTING
CONNECTION SETTING
SERVER NAME:
http://xyz1.abc.co.jp/xxxxxxx/yyyyy
716
PORT NUMBER:
80
717
SETTING
718

# FIG.7C

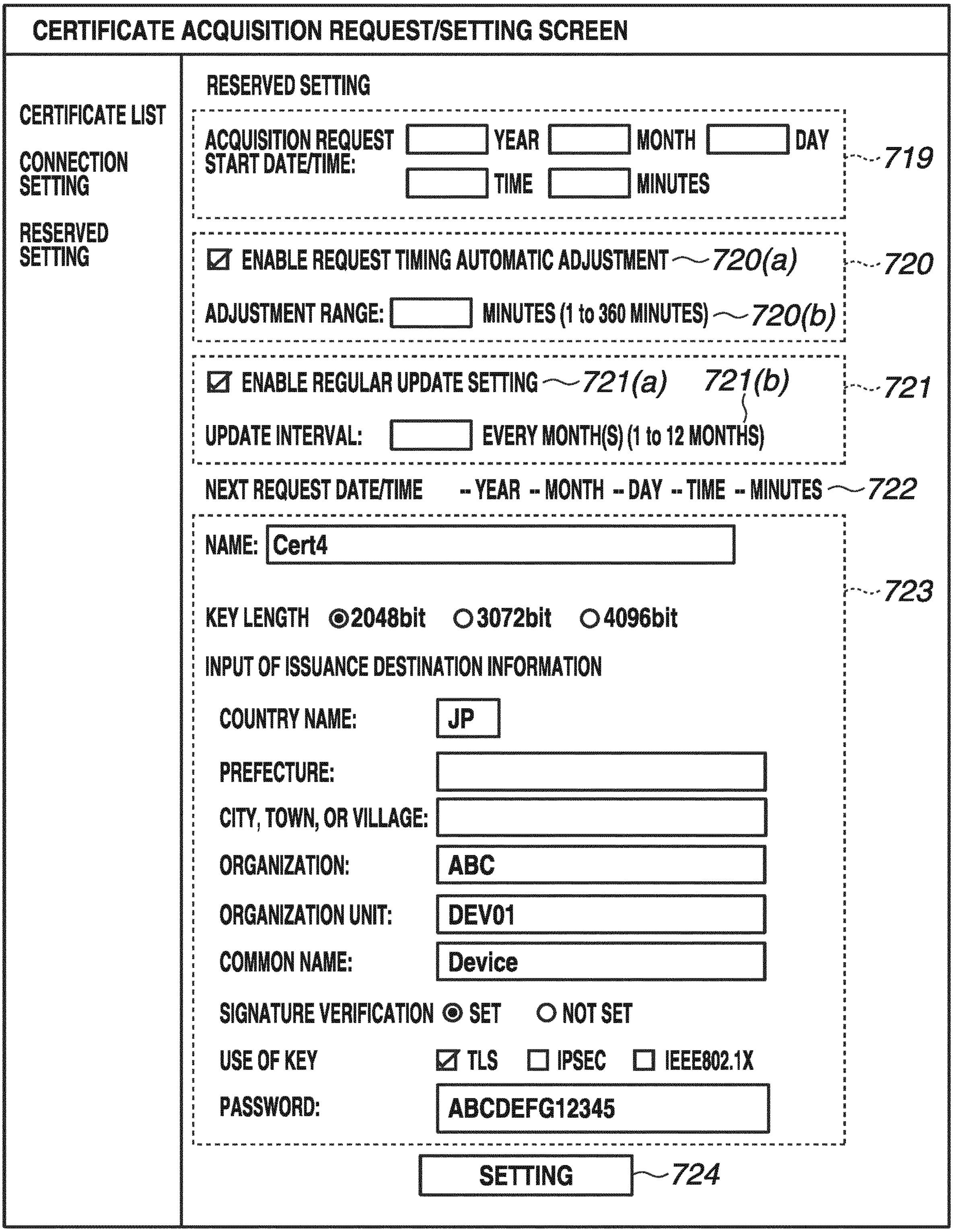
CERTIFICATE ACQUISITION REQUEST/SETTING SCREEN
CERTIFICATE LIST
CONNECTION SETTING
RESERVED SETTING
RESERVED SETTING
ACQUISITION REQUEST START DATE/TIME:
YEAR
MONTH
DAY
TIME
MINUTES
719
ENABLE REQUEST TIMING AUTOMATIC ADJUSTMENT
720(a)
720
ADJUSTMENT RANGE:
MINUTES (1 to 360 MINUTES)
720(b)
ENABLE REGULAR UPDATE SETTING
721(a)
721(b)
721
UPDATE INTERVAL:
EVERY MONTH(S) (1 to 12 MONTHS)
NEXT REQUEST DATE/TIME
-- YEAR -- MONTH -- DAY -- TIME -- MINUTES
722
NAME:
Cert4
723
KEY LENGTH
2048bit
3072bit
4096bit
INPUT OF ISSUANCE DESTINATION INFORMATION
COUNTRY NAME:
JP
PREFECTURE:
CITY, TOWN, OR VILLAGE:
ORGANIZATION:
ABC
ORGANIZATION UNIT:
DEV01
COMMON NAME:
Device
SIGNATURE VERIFICATION
SET
NOT SET
USE OF KEY
TLS
IPSEC
IEEE802.1X
PASSWORD:
ABCDEFG12345
SETTING
724

FIG.7D

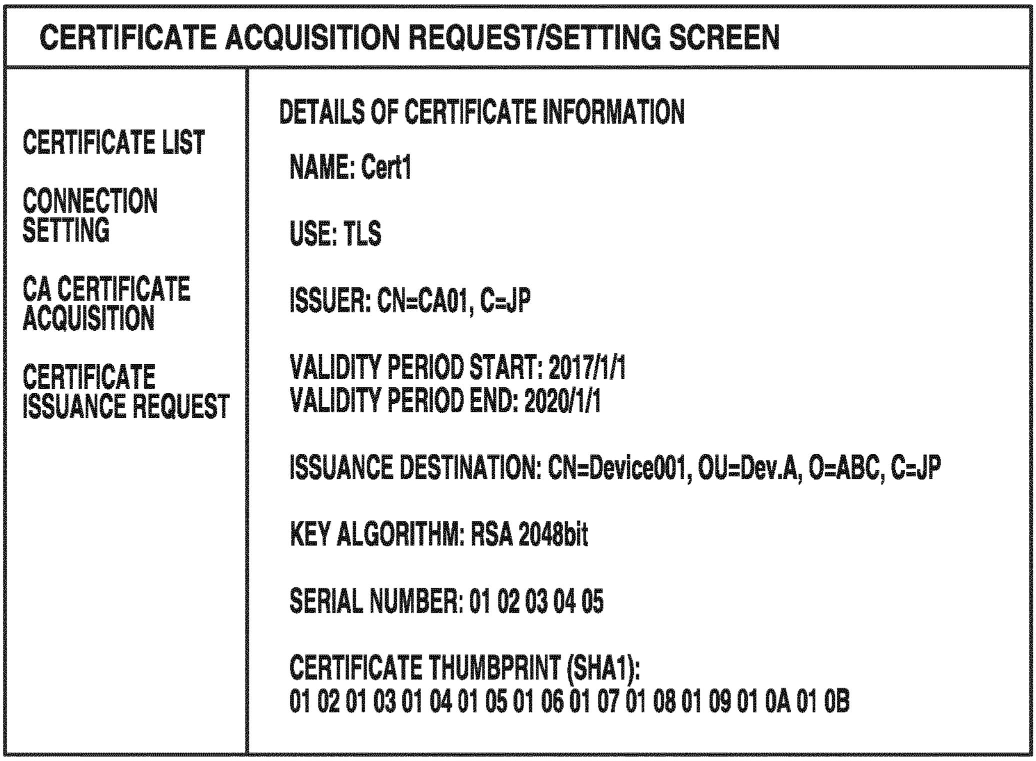
CERTIFICATE ACQUISITION REQUEST/SETTING SCREEN
CERTIFICATE LIST
CONNECTION SETTING
CA CERTIFICATE ACQUISITION
CERTIFICATE ISSUANCE REQUEST
DETAILS OF CERTIFICATE INFORMATION
NAME: Cert1
USE: TLS
ISSUER: CN=CA01, C=JP
VALIDITY PERIOD START: 2017/1/1
VALIDITY PERIOD END: 2020/1/1
ISSUANCE DESTINATION: CN=Device001, OU=Dev.A, O=ABC, C=JP
KEY ALGORITHM: RSA 2048bit
SERIAL NUMBER: 01 02 03 04 05
CERTIFICATE THUMBPRINT (SHA1):
01 02 01 03 01 04 01 05 01 06 01 07 01 08 01 09 01 0A 01 0B

FIG.8A

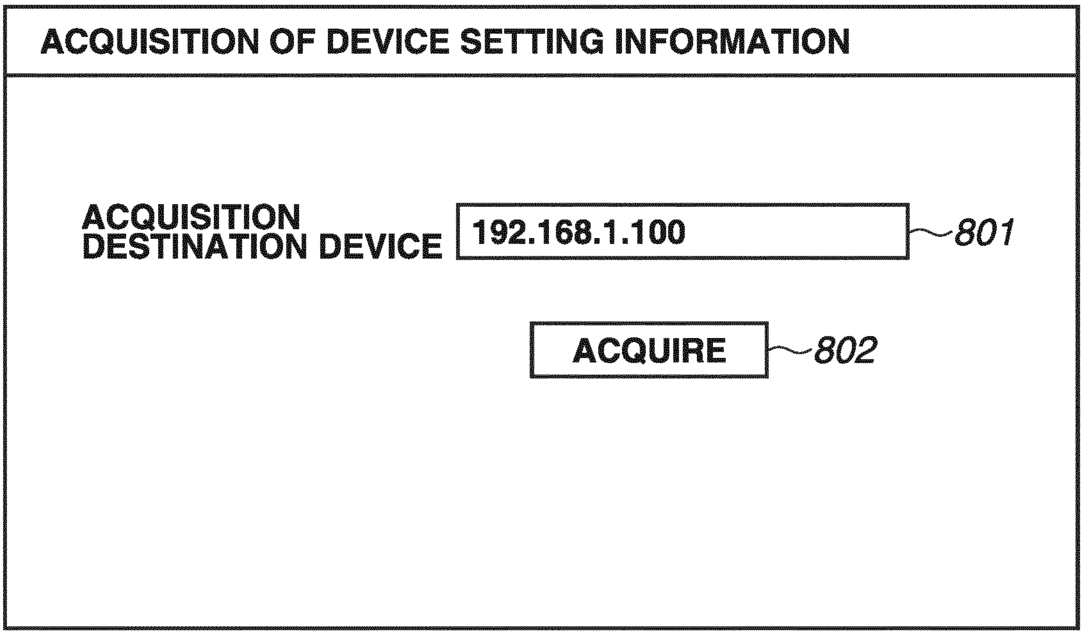
ACQUISITION OF DEVICE SETTING INFORMATION
ACQUISITION DESTINATION DEVICE
192.168.1.100
801
ACQUIRE
802

FIG.8B

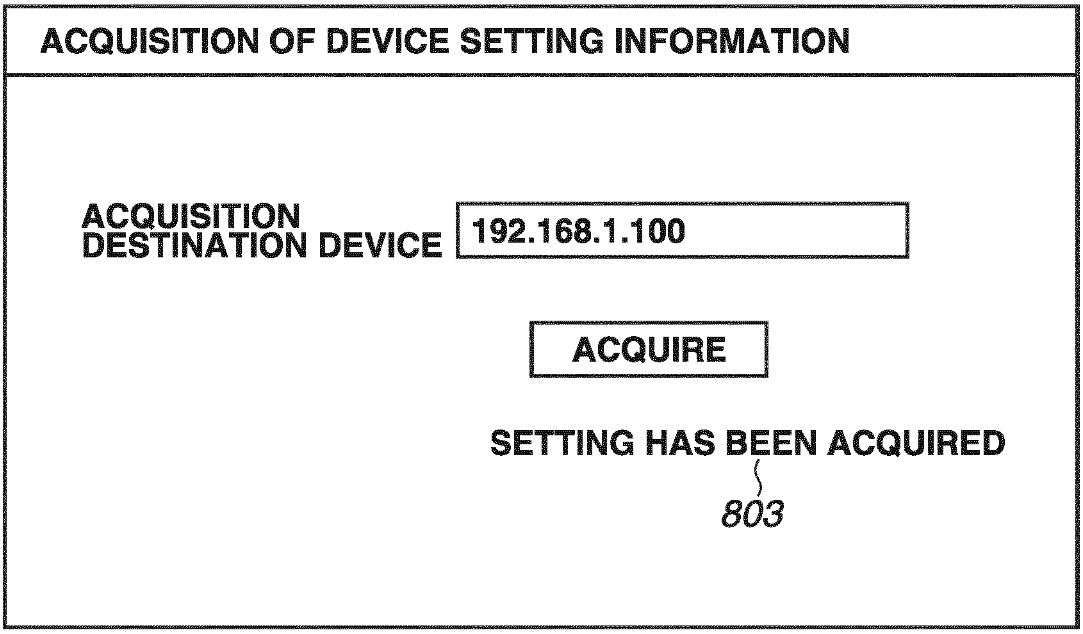
ACQUISITION OF DEVICE SETTING INFORMATION
ACQUISITION DESTINATION DEVICE
192.168.1.100
ACQUIRE
SETTING HAS BEEN ACQUIRED
803

# FIG.9


```
<?xml version="1.0" encoding="UTF-8"?>
 <ConfigurationData SchemaVersion="1.0.0">
  <ConfigurationEntry>
   <AppInfo AppID="XXXXXXX-XXXXXXX-XXXXXXX"/>
    <Configuration Level="0" Name="ConnectSettings">
     <Property><Key>host</Key><Type ArrayDetail="String">Array</Type><Value
Type="String">http://xyz1.abc.co.jp/xxxxxxxx/yyyyy</Value></Property>
     <Property><Key>port</Key><Type>Integer</Type><Value>80</Value></Property>
    </Configuration>
  </ConfigurationEntry>
  <ConfigurationEntry>
   <AppInfo AppID="XXXXXXX-XXXXXXX-YYYYYYY"/>
    <Configuration Level="0" Name="TimerSetting">
     <Property><Key>UpdateYear</Key><Type>Integer</Type><Value>2017</Value></Property>
     <Property><Key>UpdateMonth</Key><Type>Integer</Type><Value>4</Value></Property>
     <Property><Key>UpdateDay</Key><Type>Integer</Type><Value>1</Value></Property>
     <Property><Key>UpdateHour</Key><Type>Integer</Type><Value>12</Value></Property>
     <Property><Key>UpdateMin</Key><Type>Integer</Type><Value>0</Value></Property>
     <Property><Key>UpdateSec</Key><Type>Integer</Type><Value>0</Value></Property>
     <Property><Key>AutoAdjust</Key><Type>Boolean</Type><Value>true</Value></Property>
     <Property><Key>AdjustTime</Key><Type>Integer</Type><Value>60</Value></Property>
     <Property><Key>ScheduleSettings</Key><Type>Boolean</Type><Value>true</Value></Property>
     <Property><Key>Interval</Key><Type>Integer</Type><Value>6</Value></Property>
     </Configuration>
```

# FIG.10A

DISTRIBUTION OF DEVICE SETTING INFORMATION

1001 1002 1003 1004

| No. | DISTRIBUTION | DEVICE NAME | CONNECTION DESTINATION | DISTRIBUTION RESULT |
|---|---|---|---|---|
| 1 | ☑ | DeviceB | 192.168.1.104 | |
| 2 | ☑ | DeviceC | 192.168.1.105 | |
| 3 | ☑ | DeviceD | 192.168.1.106 | |
| | | | | |
| | | | | |
| | | | | |

DISTRIBUTION 1005

# FIG.10B

DISTRIBUTION OF DEVICE SETTING INFORMATION

1001 1002 1003 1004

| No. | DISTRIBUTION | DEVICE NAME | CONNECTION DESTINATION | DISTRIBUTION RESULT |
|---|---|---|---|---|
| 1 | ☑ | DeviceB | 192.168.1.104 | OK |
| 2 | ☑ | DeviceC | 192.168.1.105 | OK |
| 3 | ☑ | DeviceD | 192.168.1.106 | OK |
| | | | | |
| | | | | |
| | | | | |

DISTRIBUTION 1005

# FIG.11

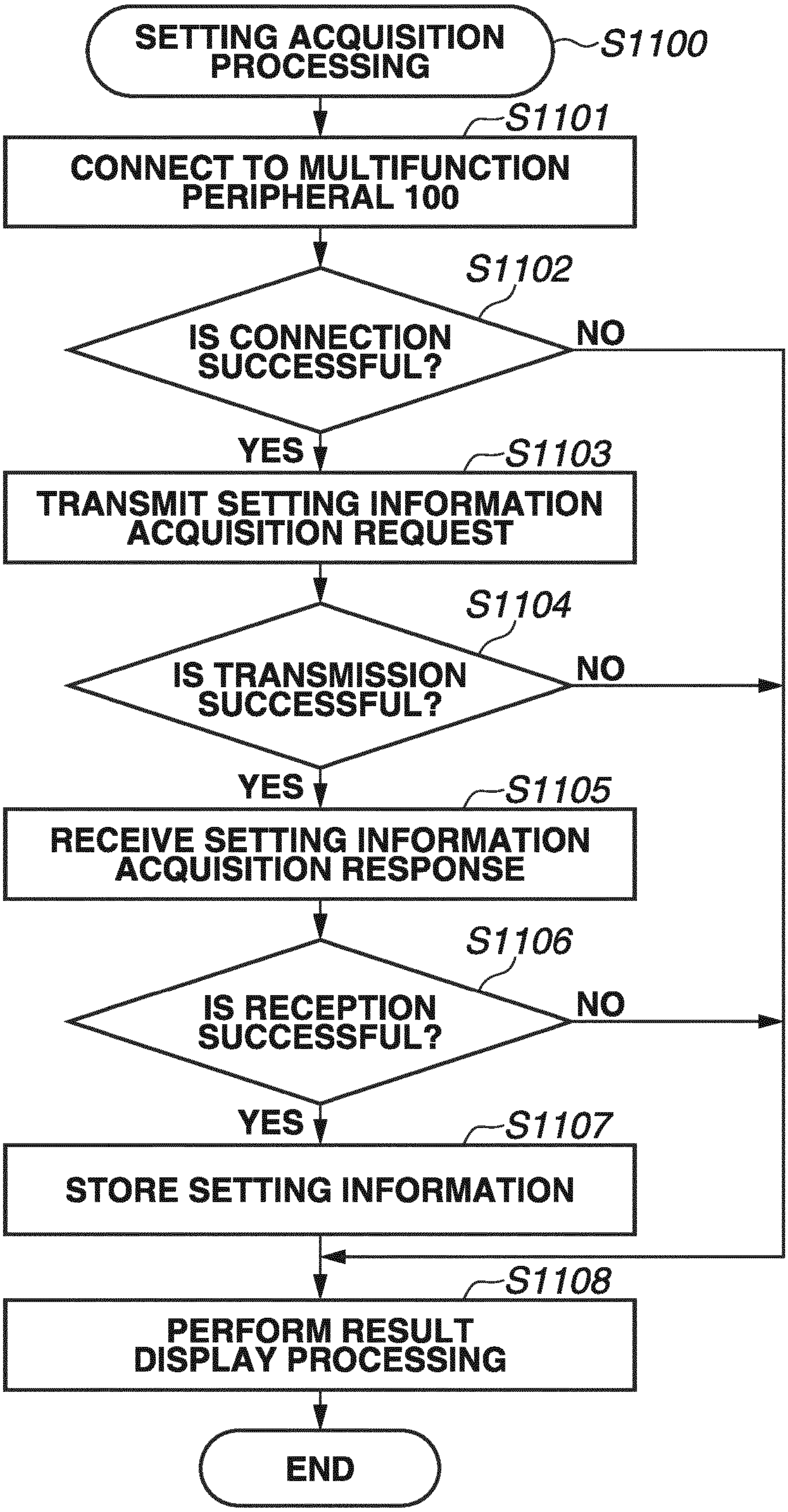
SETTING ACQUISITION PROCESSING
S1100
S1101
CONNECT TO MULTIFUNCTION PERIPHERAL 100
S1102
IS CONNECTION SUCCESSFUL?
NO
YES
S1103
TRANSMIT SETTING INFORMATION ACQUISITION REQUEST
S1104
IS TRANSMISSION SUCCESSFUL?
NO
YES
S1105
RECEIVE SETTING INFORMATION ACQUISITION RESPONSE
S1106
IS RECEPTION SUCCESSFUL?
NO
YES
S1107
STORE SETTING INFORMATION
S1108
PERFORM RESULT DISPLAY PROCESSING
END

FIG.12

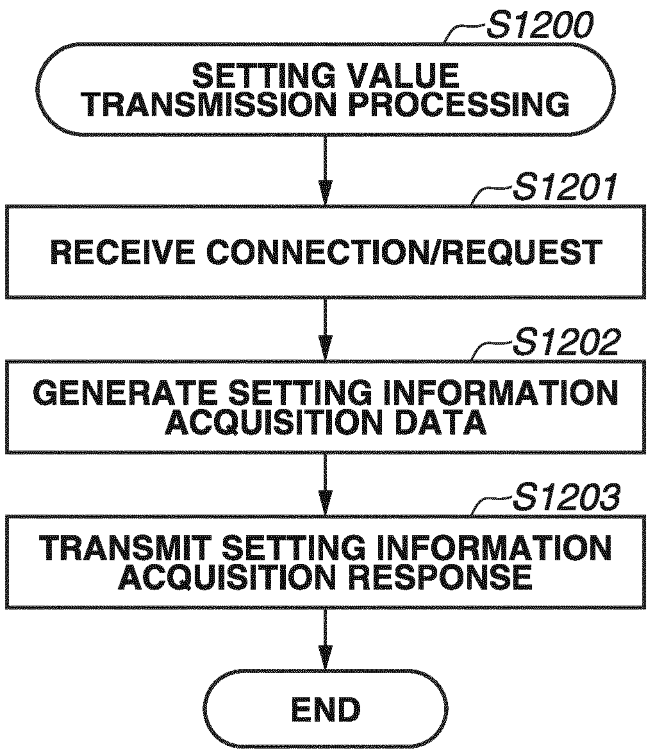
S1200
SETTING VALUE TRANSMISSION PROCESSING
S1201
RECEIVE CONNECTION/REQUEST
S1202
GENERATE SETTING INFORMATION ACQUISITION DATA
S1203
TRANSMIT SETTING INFORMATION ACQUISITION RESPONSE
END

FIG.13

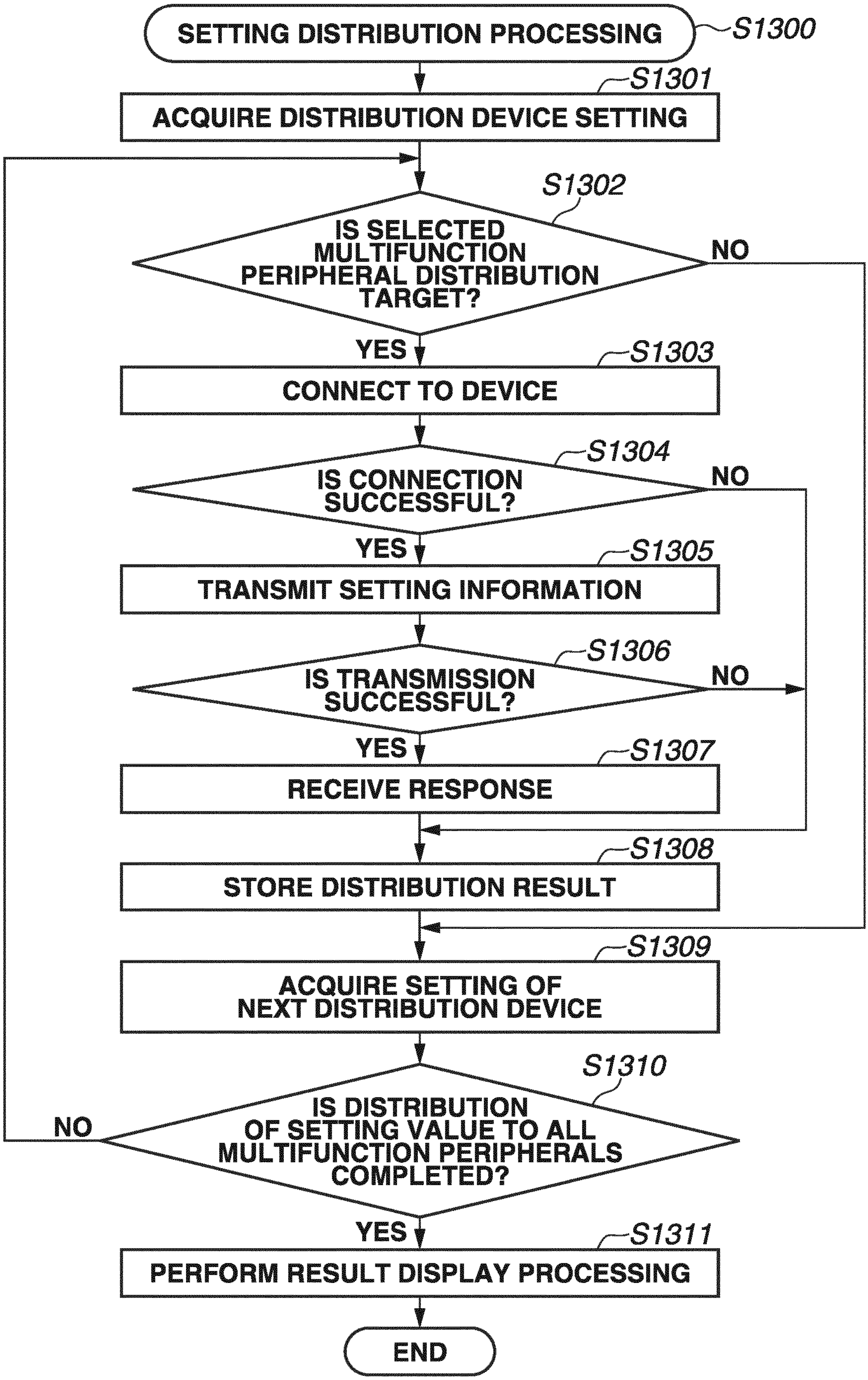
SETTING DISTRIBUTION PROCESSING
S1300
S1301
ACQUIRE DISTRIBUTION DEVICE SETTING
S1302
IS SELECTED MULTIFUNCTION PERIPHERAL DISTRIBUTION TARGET?
NO
YES
S1303
CONNECT TO DEVICE
S1304
IS CONNECTION SUCCESSFUL?
NO
YES
S1305
TRANSMIT SETTING INFORMATION
S1306
IS TRANSMISSION SUCCESSFUL?
NO
YES
S1307
RECEIVE RESPONSE
S1308
STORE DISTRIBUTION RESULT
S1309
ACQUIRE SETTING OF NEXT DISTRIBUTION DEVICE
S1310
IS DISTRIBUTION OF SETTING VALUE TO ALL MULTIFUNCTION PERIPHERALS COMPLETED?
NO
YES
S1311
PERFORM RESULT DISPLAY PROCESSING
END

FIG.14

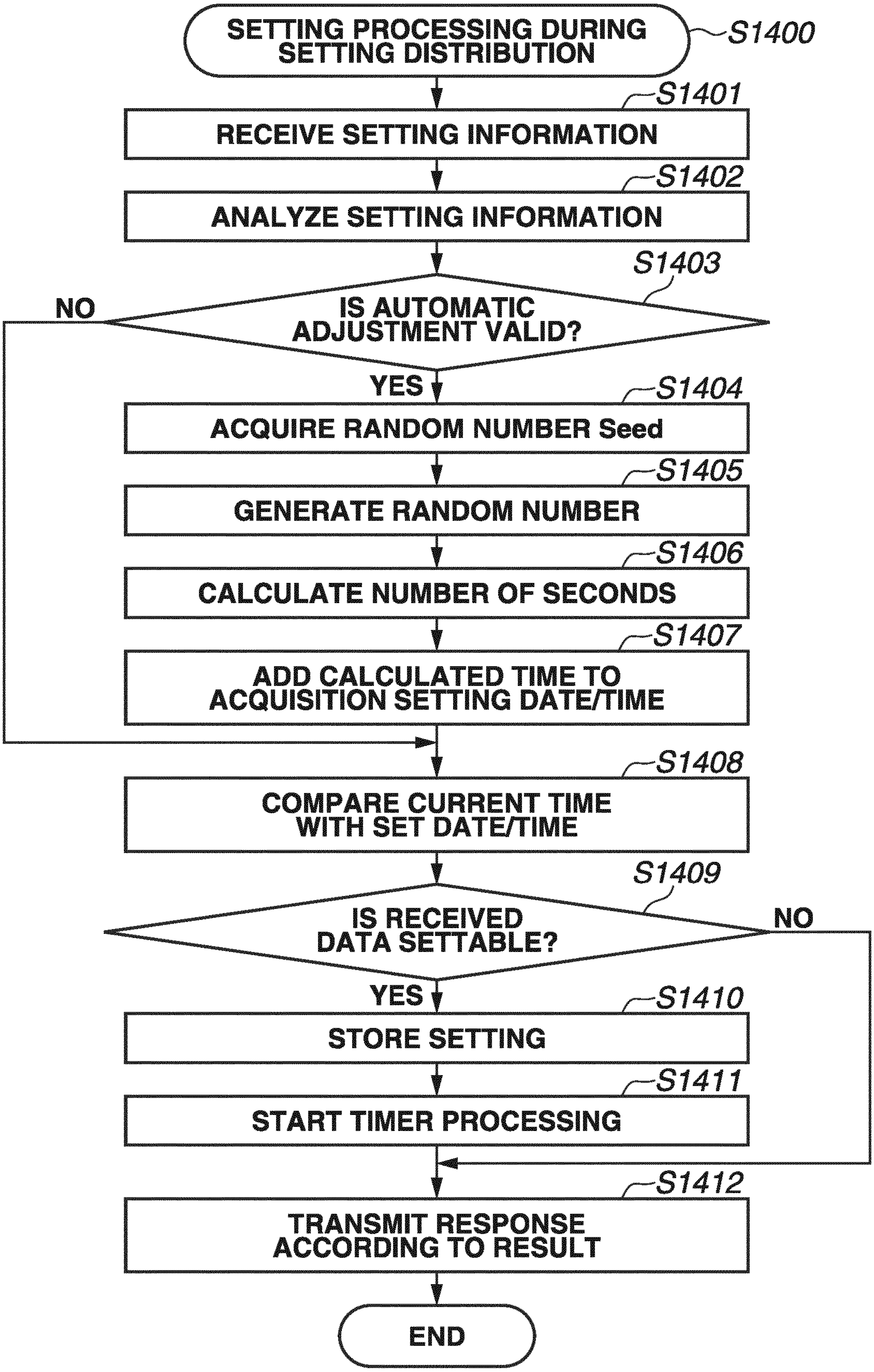
SETTING PROCESSING DURING SETTING DISTRIBUTION
S1400
S1401
RECEIVE SETTING INFORMATION
S1402
ANALYZE SETTING INFORMATION
S1403
IS AUTOMATIC ADJUSTMENT VALID?
NO
YES
S1404
ACQUIRE RANDOM NUMBER Seed
S1405
GENERATE RANDOM NUMBER
S1406
CALCULATE NUMBER OF SECONDS
S1407
ADD CALCULATED TIME TO ACQUISITION SETTING DATE/TIME
S1408
COMPARE CURRENT TIME WITH SET DATE/TIME
S1409
IS RECEIVED DATA SETTABLE?
NO
YES
S1410
STORE SETTING
S1411
START TIMER PROCESSING
S1412
TRANSMIT RESPONSE ACCORDING TO RESULT
END

FIG.15

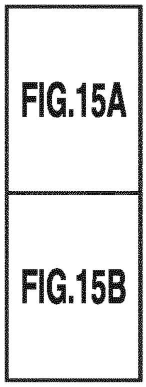


FIG.15A

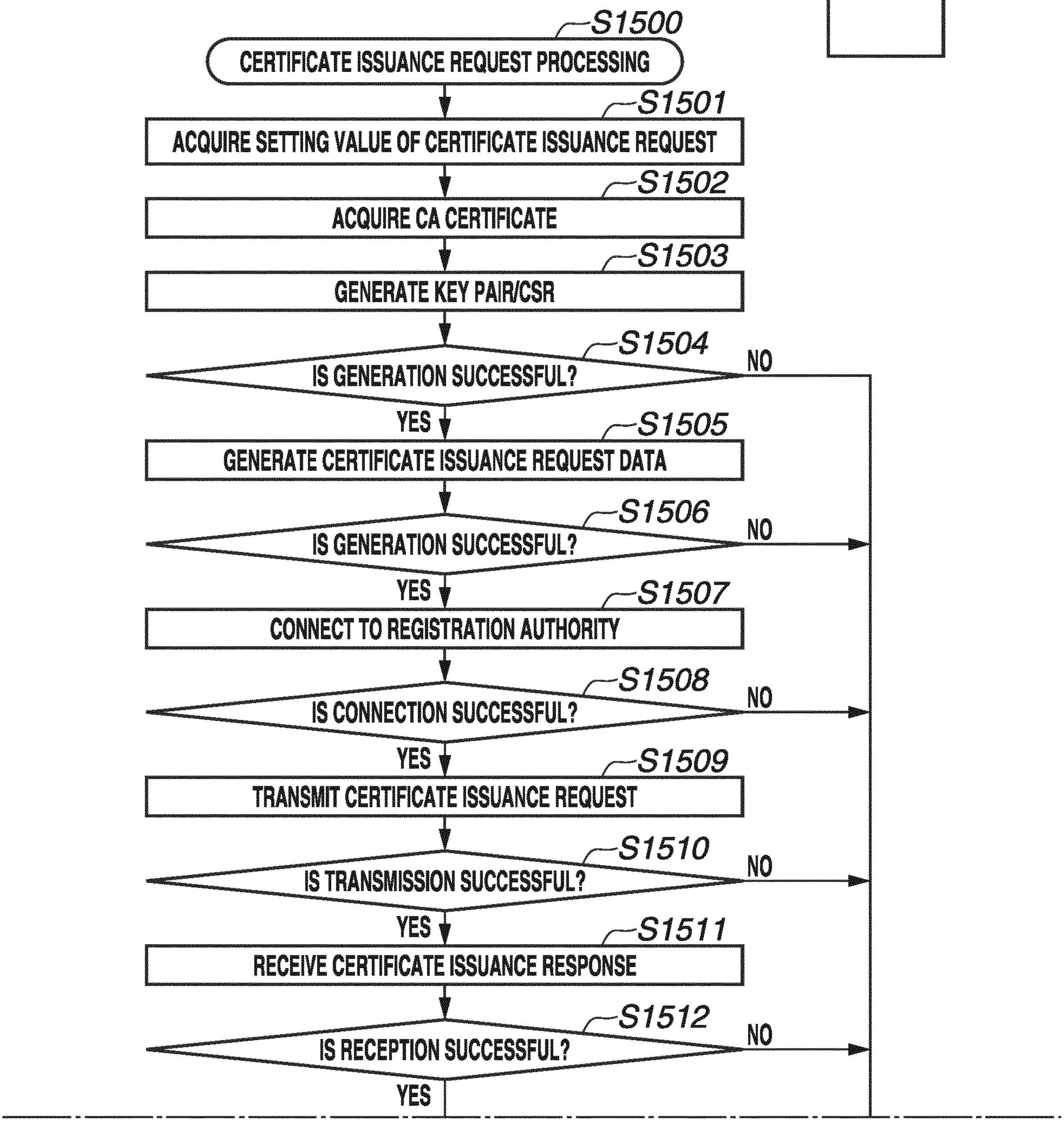

# FIG.15B

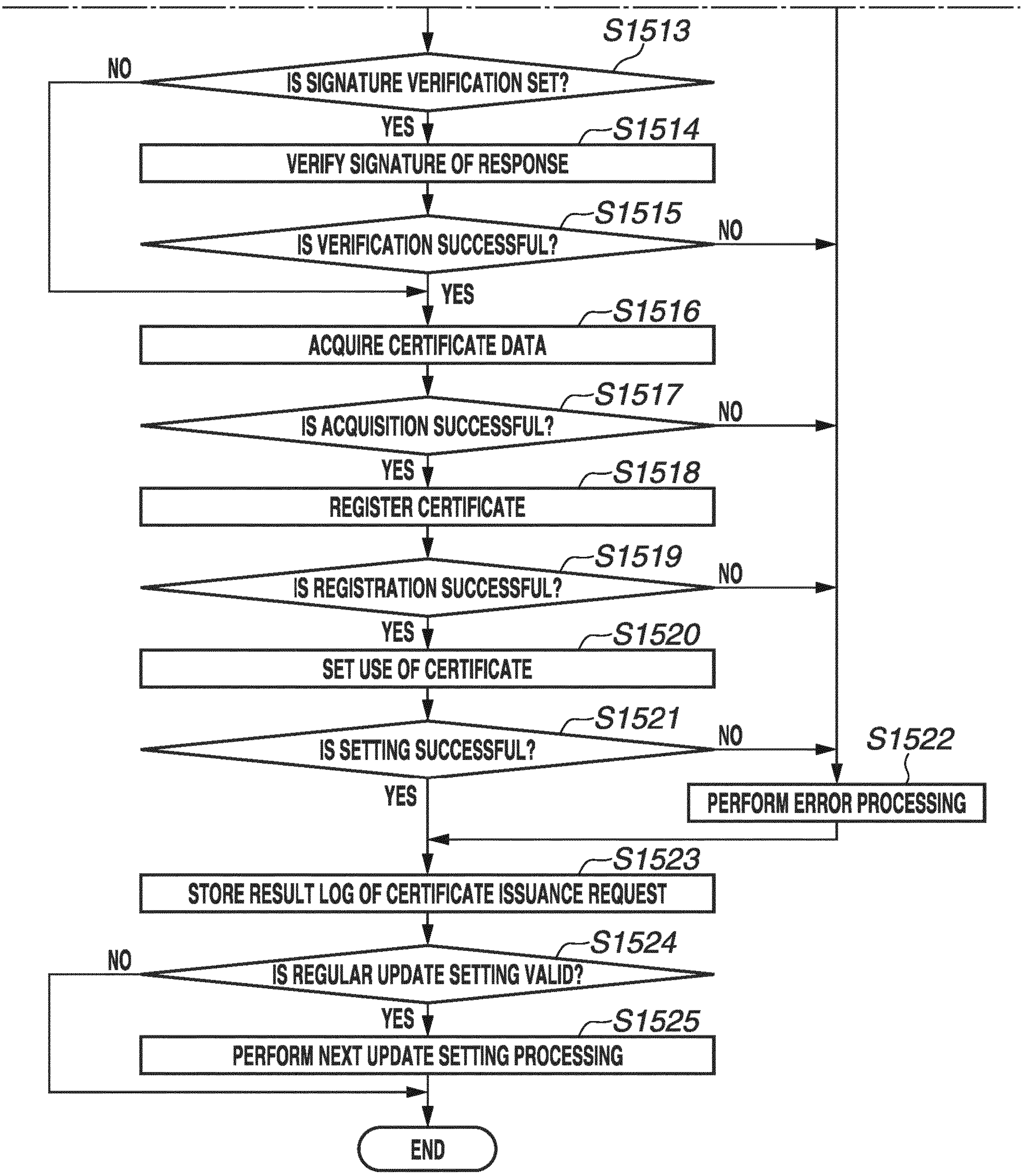
S1513
NO
IS SIGNATURE VERIFICATION SET?
YES
S1514
VERIFY SIGNATURE OF RESPONSE
S1515
IS VERIFICATION SUCCESSFUL?
NO
YES
S1516
ACQUIRE CERTIFICATE DATA
S1517
IS ACQUISITION SUCCESSFUL?
NO
YES
S1518
REGISTER CERTIFICATE
S1519
IS REGISTRATION SUCCESSFUL?
NO
YES
S1520
SET USE OF CERTIFICATE
S1521
IS SETTING SUCCESSFUL?
NO
S1522
PERFORM ERROR PROCESSING
YES
S1523
STORE RESULT LOG OF CERTIFICATE ISSUANCE REQUEST
S1524
NO
IS REGULAR UPDATE SETTING VALID?
YES
S1525
PERFORM NEXT UPDATE SETTING PROCESSING
END

FIG.16

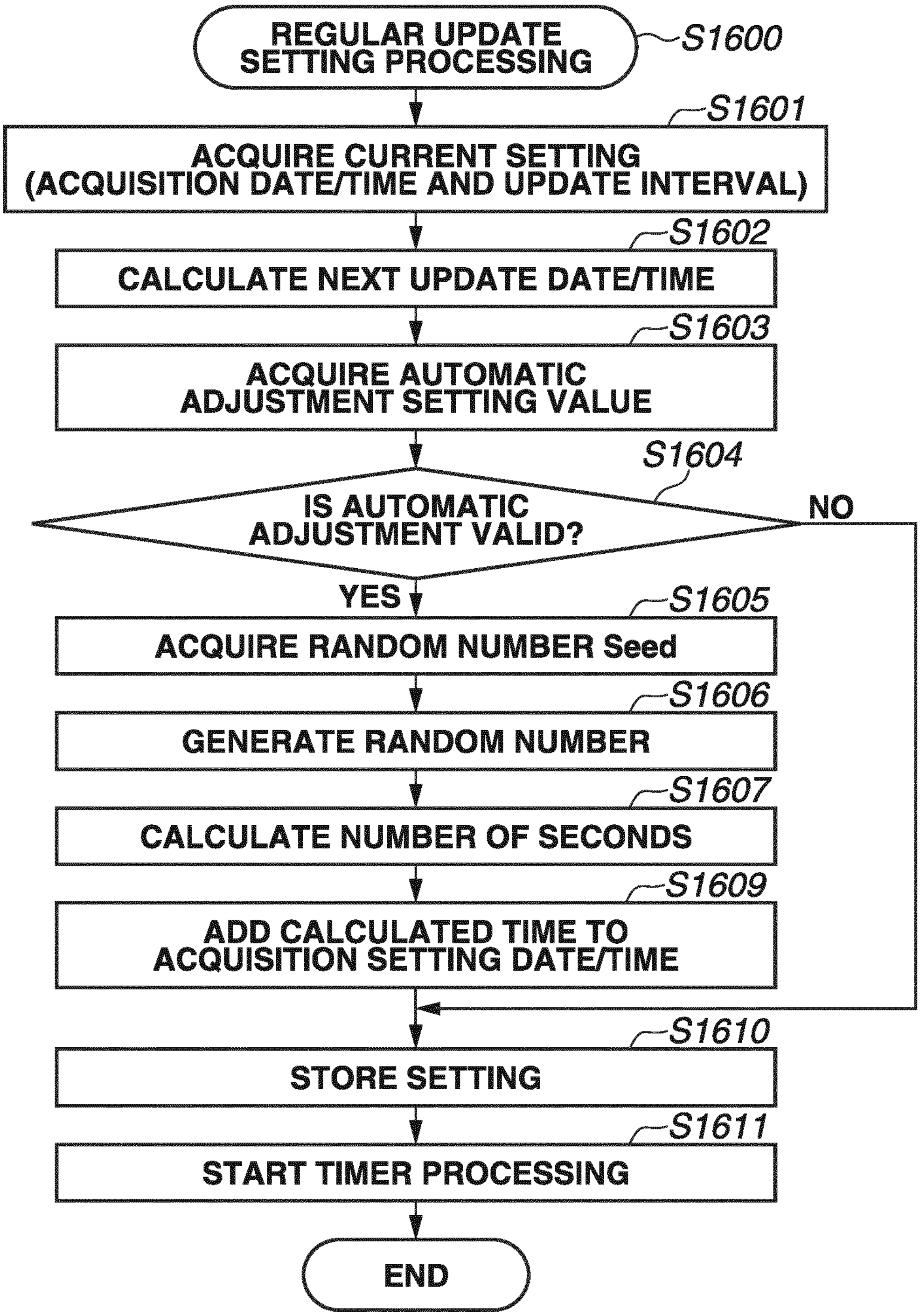
REGULAR UPDATE SETTING PROCESSING
S1600
S1601
ACQUIRE CURRENT SETTING (ACQUISITION DATE/TIME AND UPDATE INTERVAL)
S1602
CALCULATE NEXT UPDATE DATE/TIME
S1603
ACQUIRE AUTOMATIC ADJUSTMENT SETTING VALUE
S1604
IS AUTOMATIC ADJUSTMENT VALID?
NO
YES
S1605
ACQUIRE RANDOM NUMBER Seed
S1606
GENERATE RANDOM NUMBER
S1607
CALCULATE NUMBER OF SECONDS
S1609
ADD CALCULATED TIME TO ACQUISITION SETTING DATE/TIME
S1610
STORE SETTING
S1611
START TIMER PROCESSING
END

# FIG.17

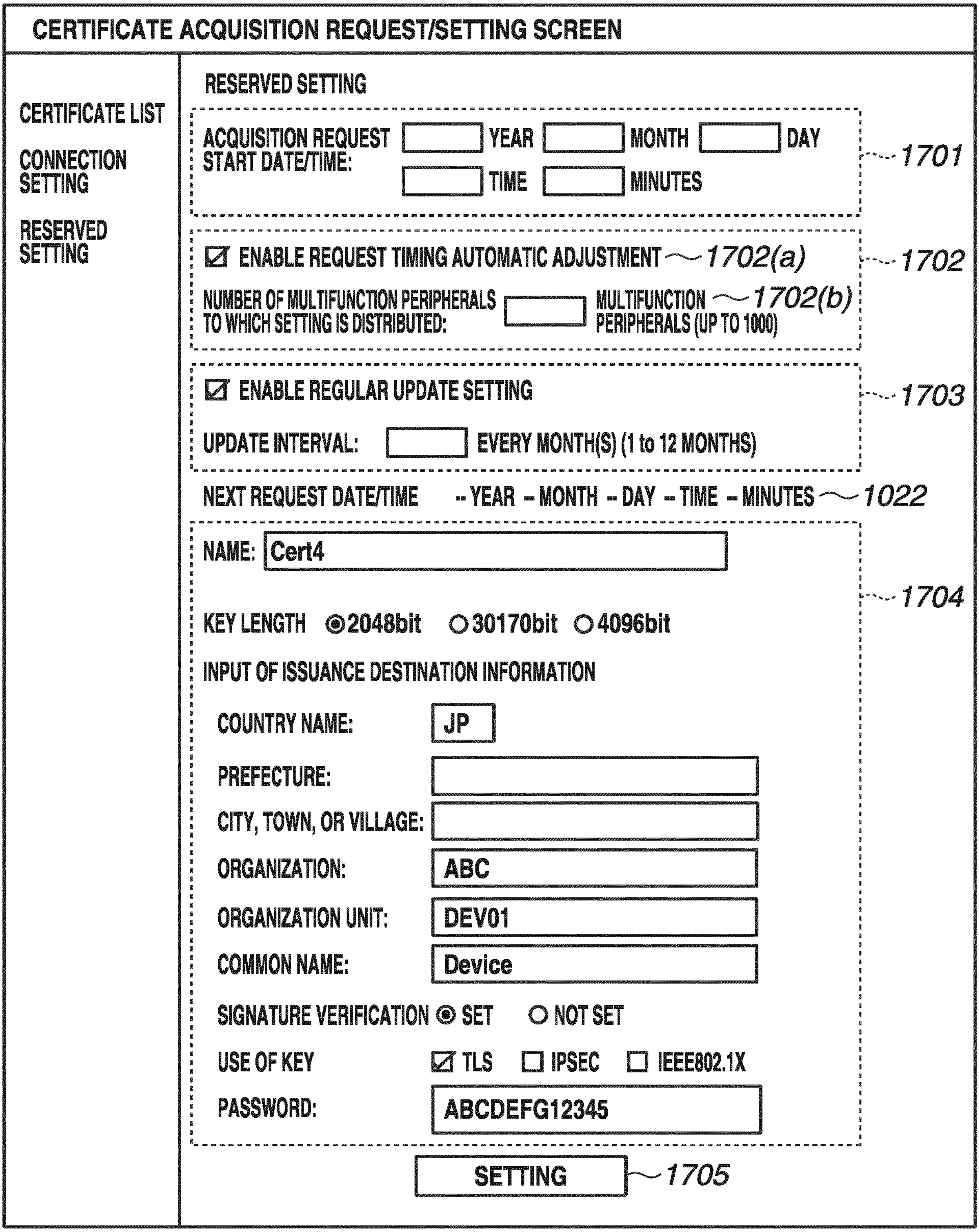
CERTIFICATE ACQUISITION REQUEST/SETTING SCREEN
CERTIFICATE LIST
CONNECTION SETTING
RESERVED SETTING
RESERVED SETTING
ACQUISITION REQUEST START DATE/TIME:
YEAR
MONTH
DAY
TIME
MINUTES
1701
ENABLE REQUEST TIMING AUTOMATIC ADJUSTMENT
1702(a)
1702
NUMBER OF MULTIFUNCTION PERIPHERALS TO WHICH SETTING IS DISTRIBUTED:
MULTIFUNCTION PERIPHERALS (UP TO 1000)
1702(b)
ENABLE REGULAR UPDATE SETTING
1703
UPDATE INTERVAL:
EVERY MONTH(S) (1 to 12 MONTHS)
NEXT REQUEST DATE/TIME
-- YEAR -- MONTH -- DAY -- TIME -- MINUTES
1022
NAME:
Cert4
1704
KEY LENGTH
2048bit
30170bit
4096bit
INPUT OF ISSUANCE DESTINATION INFORMATION
COUNTRY NAME:
JP
PREFECTURE:
CITY, TOWN, OR VILLAGE:
ORGANIZATION:
ABC
ORGANIZATION UNIT:
DEV01
COMMON NAME:
Device
SIGNATURE VERIFICATION
SET
NOT SET
USE OF KEY
TLS
IPSEC
IEEE802.1X
PASSWORD:
ABCDEFG12345
SETTING
1705

FIG.18

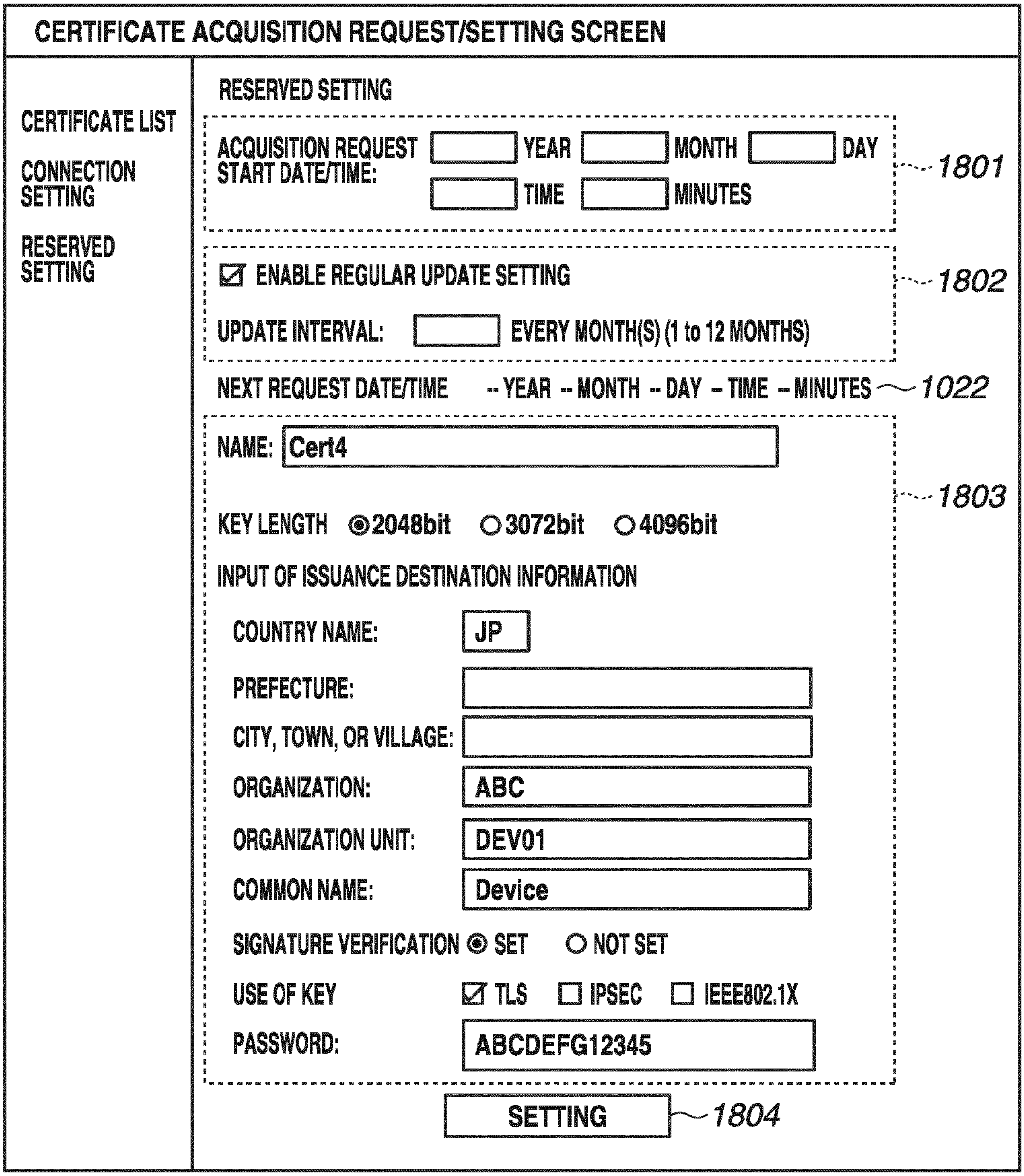
CERTIFICATE ACQUISITION REQUEST/SETTING SCREEN
CERTIFICATE LIST
CONNECTION SETTING
RESERVED SETTING
RESERVED SETTING
ACQUISITION REQUEST START DATE/TIME:
YEAR
MONTH
DAY
TIME
MINUTES
1801
ENABLE REGULAR UPDATE SETTING
UPDATE INTERVAL:
EVERY MONTH(S) (1 to 12 MONTHS)
1802
NEXT REQUEST DATE/TIME
-- YEAR -- MONTH -- DAY -- TIME -- MINUTES
1022
NAME:
Cert4
1803
KEY LENGTH
2048bit
3072bit
4096bit
INPUT OF ISSUANCE DESTINATION INFORMATION
COUNTRY NAME:
JP
PREFECTURE:
CITY, TOWN, OR VILLAGE:
ORGANIZATION:
ABC
ORGANIZATION UNIT:
DEV01
COMMON NAME:
Device
SIGNATURE VERIFICATION
SET
NOT SET
USE OF KEY
TLS
IPSEC
IEEE802.1X
PASSWORD:
ABCDEFG12345
SETTING
1804

FIG.19

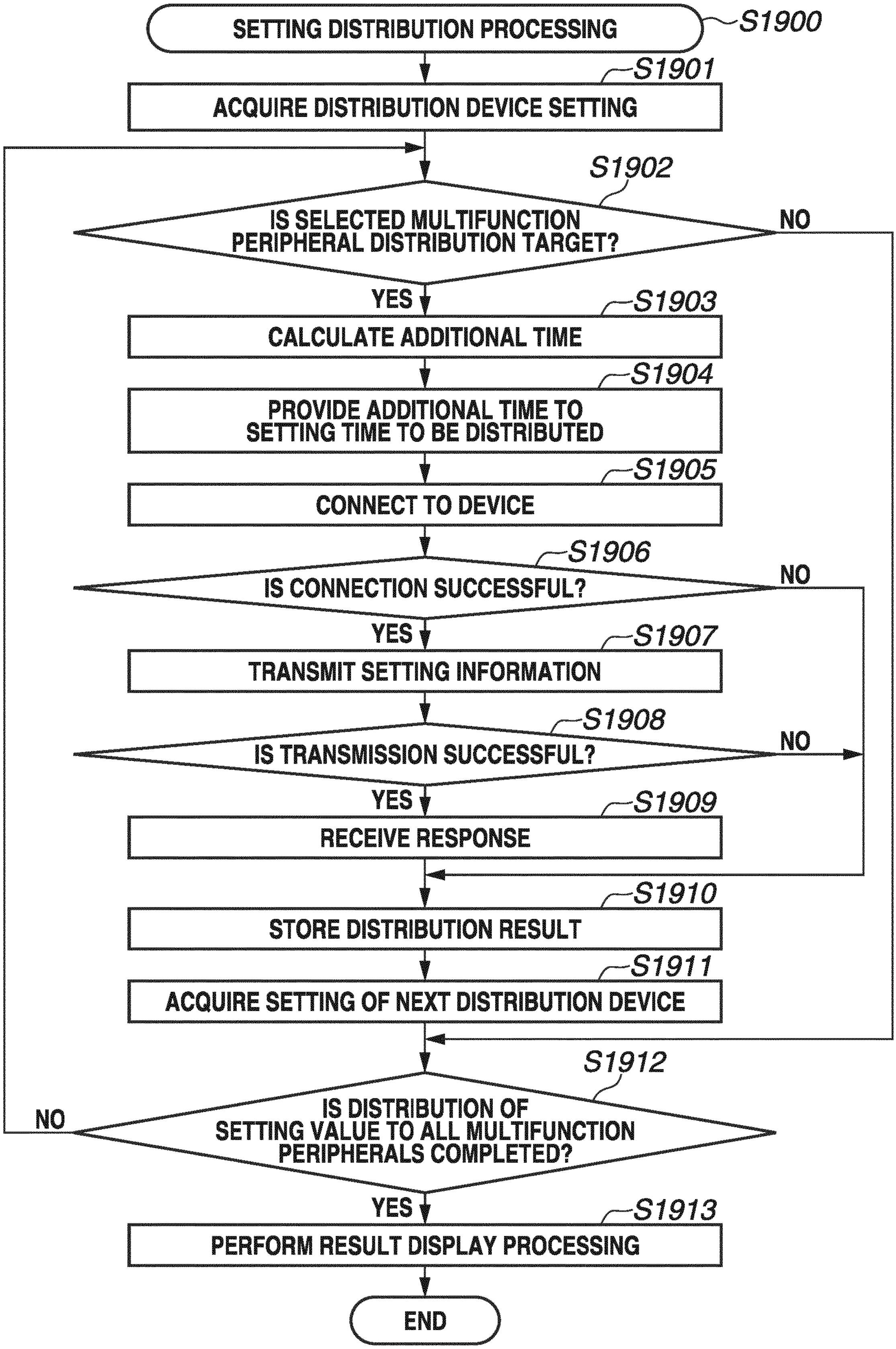
SETTING DISTRIBUTION PROCESSING
S1900
S1901
ACQUIRE DISTRIBUTION DEVICE SETTING
S1902
IS SELECTED MULTIFUNCTION PERIPHERAL DISTRIBUTION TARGET?
NO
YES
S1903
CALCULATE ADDITIONAL TIME
S1904
PROVIDE ADDITIONAL TIME TO SETTING TIME TO BE DISTRIBUTED
S1905
CONNECT TO DEVICE
S1906
IS CONNECTION SUCCESSFUL?
NO
YES
S1907
TRANSMIT SETTING INFORMATION
S1908
IS TRANSMISSION SUCCESSFUL?
NO
YES
S1909
RECEIVE RESPONSE
S1910
STORE DISTRIBUTION RESULT
S1911
ACQUIRE SETTING OF NEXT DISTRIBUTION DEVICE
S1912
IS DISTRIBUTION OF SETTING VALUE TO ALL MULTIFUNCTION PERIPHERALS COMPLETED?
NO
YES
S1913
PERFORM RESULT DISPLAY PROCESSING
END

# FIG.20

**DISTRIBUTION OF DEVICE SETTING INFORMATION**

2001

| No. | DISTRIBUTION | DEVICE NAME | CONNECTION DESTINATION | GROUP | DISTRIBUTION RESULT |
|---|---|---|---|---|---|
| 1 | ☑ | Device1 | 192.168.1.101 | A | |
| ⋮ | | | | | |
| 10 | ☑ | Device10 | 192.168.1.111 | A | |
| 11 | | Device11 | 192.168.1.112 | B | |
| ⋮ | | | | | |
| 20 | ☑ | Device20 | 192.168.1.121 | B | |
| 21 | ☑ | Device21 | 192.168.1.122 | C | |
| ⋮ | | | | | |
| 30 | ☑ | Device30 | 192.168.1.131 | B | |
| | | | | | |
| | | | | | |

DISTRIBUTION

# FIG.21


```
<?xml version="1.0" encoding="UTF-8"?>
<ConfigurationData SchemaVersion="1.0.0">
 <ConfigurationEntry>
  <AppInfo AppID="XXXXXXX-XXXXXXX-XXXXXXX"/>
   <Configuration Level="0" Name="ConnectSettings">
    <Property><Key>host</Key><Type ArrayDetail="String">Array</Type><Value Type="String">http://xyz1.abc.co.jp/xxxxxxxx/yyyyy</Value></Property>
    <Property><Key>port</Key><Type>Integer</Type><Value>80</Value></Property>
   </Configuration>
 </ConfigurationEntry>
 <ConfigurationEntry>
  <AppInfo AppID="XXXXXXX-XXXXXXX-YYYYYYY"/>
   <Configuration Level="0" Name="TimerSetting">
    <Property><Key>UpdateYear</Key><Type>Integer</Type><Value>2017</Value></Property>
    <Property><Key>UpdateMonth</Key><Type>Integer</Type><Value>4</Value></Property>          ~2001
    <Property><Key>UpdateDay</Key><Type>Integer</Type><Value>1</Value></Property>
    <Property><Key>UpdateHour</Key><Type>Integer</Type><Value>12</Value></Property>
    <Property><Key>UpdateMin</Key><Type>Integer</Type><Value>0</Value></Property>
    <Property><Key>UpdateSec</Key><Type>Integer</Type><Value>0</Value></Property> ~12002
<Property><Key>ScheduleSettings</Key><Type>Boolean</Type><Value>true</Value></Propert
    <Property><Key>Interval</Key><Type>Integer</Type><Value>6</Value></Property>
   </Configuration>
 </ConfigurationEntry>
 <ConfigurationEntry>
  <AppInfo AppID="XXXXXXX-XXXXXXX-ZZZZZZZ"/>
   <Configuration Level="0" Name="CertificateInfo">
    <Property><Key>CertName</Key><Type ArrayDetail="String">Array</Type><Value Type="String">Cert4</Value></Property>
    <Property><Key>KeyLenght</Key><Type>Integer</Type><Value>1</Value></Property>
    <Property><Key>County</Key><Type ArrayDetail="String">Array</Type><Value Type="String">JP</Value></Property>
    <Property><Key>State</Key><Type ArrayDetail="String">Array</Type><Value Type="String"></Value></Property>
    <Property><Key>City</Key><Type ArrayDetail="String">Array</Type><Value Type="String"></Value></Property>
    <Property><Key>Organization</Key><Type ArrayDetail="String">Array</Type><Value Type="String">ABC</Value></Property>
    <Property><Key>OrganizationUnit</Key><Type ArrayDetail="String">Array</Type><Value Type="String">DEV01</Value></Property>
    <Property><Key>CommonName</Key><Type ArrayDetail="String">Array</Type><Value Type="String">Device</Value></Property>
    <Property><Key>VerifySign</Key><Type>Boolean</Type><Value>true</Value></Property>
    <Property><Key>UsageTLS</Key><Type>Boolean</Type><Value>true</Value></Property>
    <Property><Key>UsageIPSEC</Key><Type>Boolean</Type><Value>false</Value></Property>
    <Property><Key>Usage8021X</Key><Type>Boolean</Type><Value>false</Value></Property>
    <Property><Key>ChallengePW</Key><Type ArrayDetail="String">Array</Type><Value Type="String">ABCDEFG12345</Value></Property>
 </ConfigurationEntry>
</ConfigurationData>
```

FIG.22

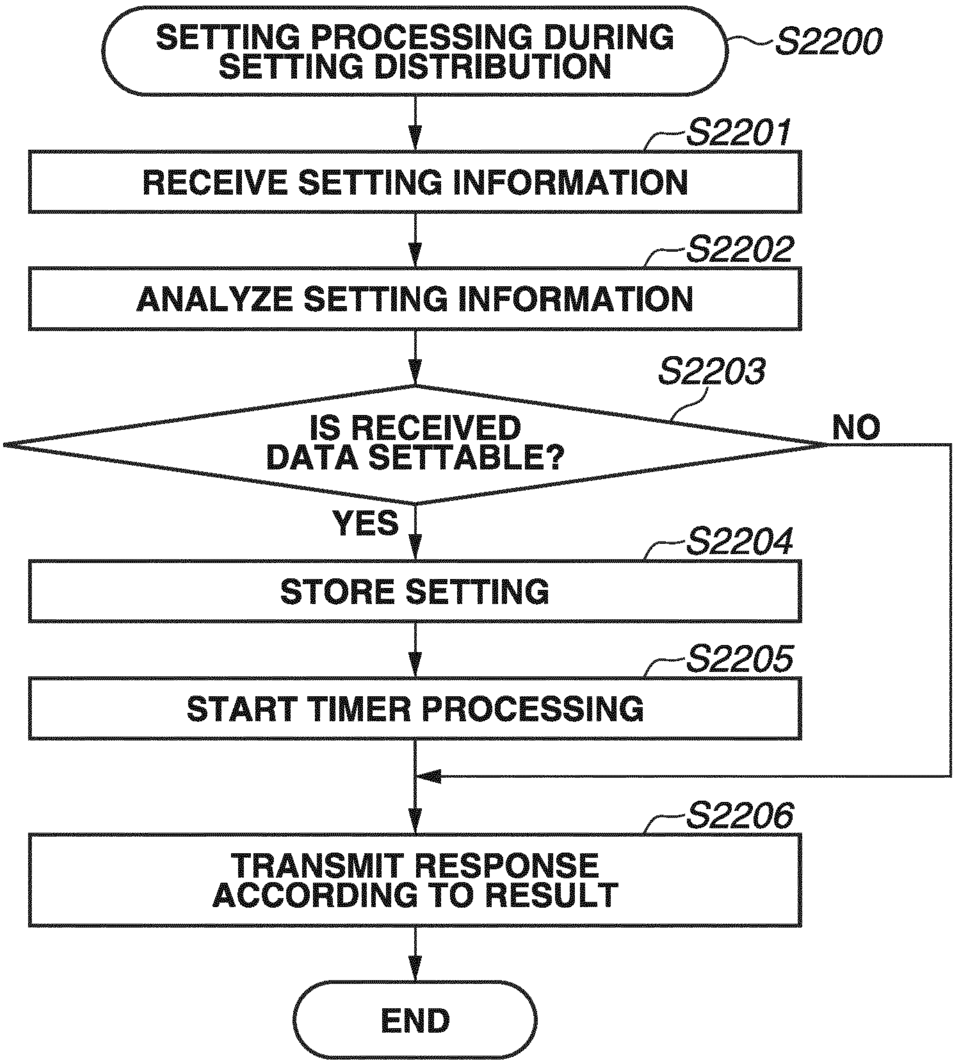
SETTING PROCESSING DURING SETTING DISTRIBUTION
S2200
S2201
RECEIVE SETTING INFORMATION
S2202
ANALYZE SETTING INFORMATION
S2203
IS RECEIVED DATA SETTABLE?
NO
YES
S2204
STORE SETTING
S2205
START TIMER PROCESSING
S2206
TRANSMIT RESPONSE ACCORDING TO RESULT
END

FIG.23

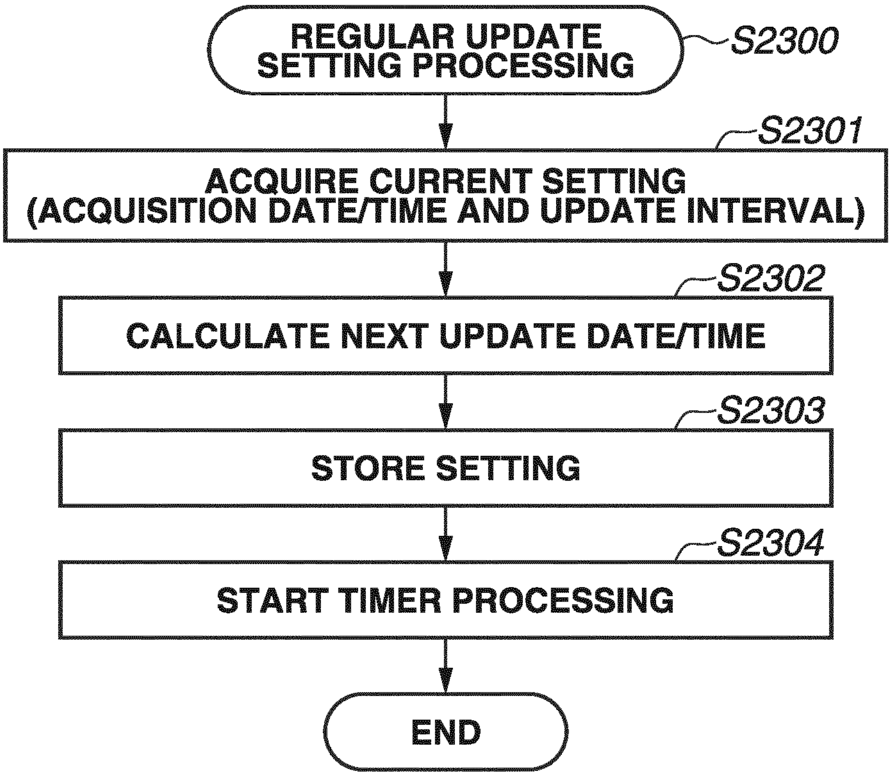
REGULAR UPDATE SETTING PROCESSING
S2300
S2301
ACQUIRE CURRENT SETTING (ACQUISITION DATE/TIME AND UPDATE INTERVAL)
S2302
CALCULATE NEXT UPDATE DATE/TIME
S2303
STORE SETTING
S2304
START TIMER PROCESSING
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016178458 A
- US 2013061299 A1
- US 2008178003 A1